(19) Europäisches Patentamt
European Patent Office
Office européen des brevets

(11) **EP 4 539 019 A1**

(12) **EUROPEAN PATENT APPLICATION**

(43) Date of publication:
**16.04.2025 Bulletin 2025/16**

(21) Application number: **24205230.6**

(22) Date of filing: **08.10.2024**

(51) International Patent Classification (IPC):
**G09B 19/24** (2006.01)

(52) Cooperative Patent Classification (CPC):
**G09B 19/24**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.10.2023 JP 2023176253**

(71) Applicant: **Kabushiki Kaisha Toshiba**
**Minato-ku**
**Tokyo 105-0023 (JP)**

(72) Inventors:
• **NISHIJIMA, Sumire**
**Tokyo 105-0023 (JP)**
• **SHINAGAWA, Hiroki**
**Tokyo 105-0023 (JP)**
• **MASUI, Yukino**
**Tokyo 105-0023 (JP)**

• **YOSHII, Takanori**
**Tokyo 105-0023 (JP)**
• **HAYASHI, Kyotaro**
**Tokyo 105-0023 (JP)**
• **NAKAMURA, Hiroaki**
**Tokyo 105-0023 (JP)**
• **HIRAHARA, Yoshiyuki**
**Tokyo 105-0023 (JP)**
• **KASE, Akiko**
**Tokyo 105-0023 (JP)**
• **FUKUDA, Masamitsu**
**Tokyo 105-0023 (JP)**
• **KOZAKAI, Takafumi**
**Tokyo 105-0023 (JP)**
• **NAMIOKA, Yasuo**
**Tokyo 105-0023 (JP)**

(74) Representative: **Hoffmann Eitle**
**Patent- und Rechtsanwälte PartmbB**
**Arabellastraße 30**
**81925 München (DE)**

(54) **PROCESSING DEVICE, TRAINING DEVICE, MIXED REALITY DEVICE, PROCESSING METHOD, AND STORAGE MEDIUM**

(57)     According to one embodiment, a processing device (3) is configured to estimate a first task location by using a first image (IMG), a screw (125) being turned at the first task location. The processing device is configured to extract first time-series data from time-series data acquired by a tool (120) turning the screw, the first time-series data being time-series data when the screw is being turned at the first task location. The processing device is configured to associate the first time-series data with data related to the first task location.

FIG. 1

EP 4 539 019 A1

**Description**

FIELD

Embodiments of the invention generally relate to a processing device, a training device, a mixed reality device, a processing method, and a storage medium.

BACKGROUND

Screws may be turned when performing a task on an article. A tool that can detect torque may be used to turn the screws. Technology that can automatically associate data related to a task location at which a screw is turned and time-series data detected by the tool is desirable.

BRIEF DESCRIPTION OF THE DRAWINGS

FIG. 1 is a schematic view showing a configuration of a processing system according to an embodiment;
FIG. 2 is a schematic view illustrating an image;
FIG. 3 is a schematic view illustrating a task;
FIG. 4 is a graph illustrating time-series data;
FIGS. 5A to 5D are graphs illustrating time-series data;
FIG. 6 is a table illustrating a database;
FIGS. 7A to 7D are schematic views illustrating abnormality types;
FIGS. 8A to 8D are schematic views illustrating abnormality types;
FIGS. 9A to 9D are graphs illustrating time-series data;
FIG. 10 is a flowchart showing a processing method according to the embodiment;
FIG. 11 is a flowchart showing the processing method according to the embodiment;
FIG. 12 is a schematic view showing a display example according to a processing device according to the embodiment;
FIG. 13 is a schematic view showing a display example according to the processing device according to the embodiment;
FIG. 14 is a schematic view showing a configuration of a processing system according to a modification of the embodiment;
FIG. 15 is a schematic view illustrating a mixed reality device;
FIG. 16 is a schematic view illustrating an article that is a task object;
FIG. 17 is a schematic view for describing processing according to the mixed reality device according to the embodiment;
FIG. 18 is a schematic view for describing the processing according to the mixed reality device according to the embodiment;
FIG. 19 is a schematic view for describing the processing according to the mixed reality device according to the embodiment;
FIG. 20 is a schematic view for describing the processing according to the mixed reality device according to the embodiment;
FIG. 21 is a schematic view for describing other processing according to the mixed reality device according to the embodiment;
FIG. 22 is a figure for describing methods for calculating a center coordinate;
FIG. 23 is a figure for describing the methods for calculating the center coordinate;
FIG. 24 is a figure for describing the methods for calculating the center coordinate;
FIGS. 25A and 25B are figures for describing a method for calculating the center coordinate;
FIG. 26 is a figure for describing the method for calculating the center coordinate;
FIG. 27 is a figure for describing the method for calculating the center coordinate;
FIG. 28 is a schematic view illustrating a task; and
FIG. 29 is a schematic view showing a hardware configuration.

DETAILED DESCRIPTION

According to one embodiment, a processing device is configured to estimate a first task location by using a first image, a screw being turned at the first task location. The processing device is configured to extract first time-series data from time-series data acquired by a tool turning the screw, the first time-series data being time-series data when the screw is being turned at the first task location. The processing device is configured to associate the first time-series data with data related to the first task location.

Embodiments of the invention will now be described with reference to the drawings. The drawings are schematic or conceptual; and the relationships between the thicknesses and widths of portions, the proportions of sizes between portions, etc., are not necessarily the same as the actual values thereof. The dimensions and/or the proportions may be illustrated differently between the drawings, even in the case where the same portion is illustrated. In the drawings and the specification of the application, components similar to those described thereinabove are marked with like reference numerals, and a detailed description is omitted as appropriate.

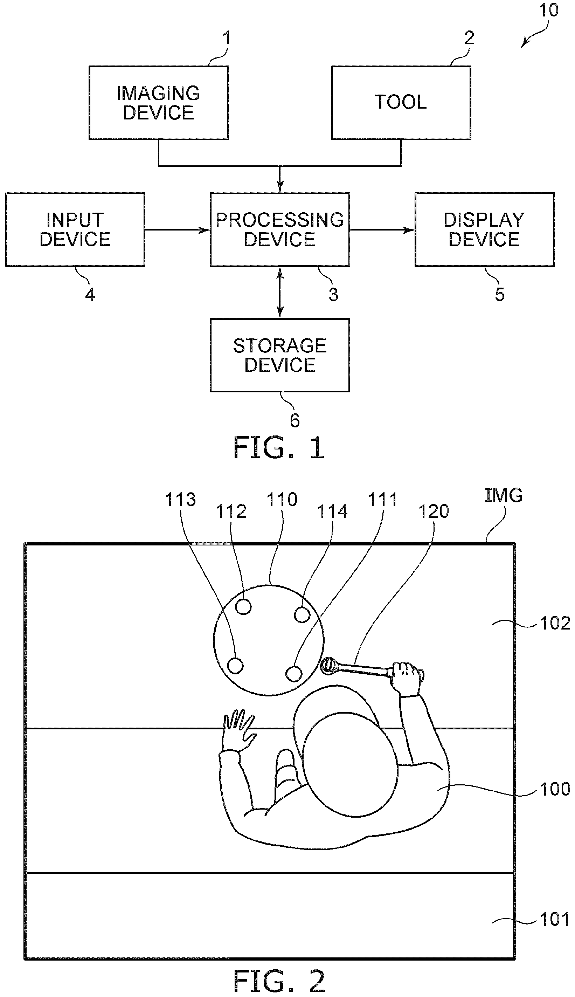

FIG. 1 is a schematic view showing a configuration of a processing system according to an embodiment.

The embodiment of the invention is applicable to a fastening task of a screw that uses a tool. As shown in FIG. 1, the processing system 10 includes an imaging device 1, a tool 2, a processing device 3, an input device 4, a display device 5, and a storage device 6.

The imaging device 1 images a worker performing a task. For example, the imaging device 1 includes a camera acquiring an RGB image. In addition to the RGB image, the imaging device 1 may acquire a depth image. The worker may be imaged by multiple imaging devices 1.

The worker uses the tool 2 to tighten and loosen a screw at the article. Hereinafter, tightening a screw and loosening a screw are called turning a screw. The article is a part, a unit, a semifinished product, etc., for making a product. The tool is a wrench.

The tool 2 is configured to detect torque. The tool 2 also is configured to transmit the detected torque to a preset device by wireless communication. The tool 2 detects the torque while the worker is turning the screw with the tool 2.

The processing device 3 receives consecutive images (video images) that are imaged by the imaging device 1. The processing device 3 uses the images to estimate a task location at which the worker is turning the screw. The processing device 3 also continuously receives the torque from the tool 2. As a result, time-series data that indicates the change of the torque over time is obtained.

The processing device 3 extracts, from the time-series data, the data when the screw is being turned at the task location. The processing device 3 associates the extracted time-series data with data (e.g., the ID) related to the task location. The processing device 3 also may associate identification information (the name or the ID) of the worker, the time, identification information of the tool, etc., with the data related to the task location.

The worker uses the input device 4 to input information to the processing device 3. For example, the input device 4 includes a keyboard, a mouse, or a touchpad. The input device 4 may include a microphone. The worker can input the information to the processing device 3 by an utterance toward the input device 4. Other than the input device 4, the worker may be able to input information to the processing device 3 by a hand gesture, etc.

The display device 5 displays the information toward the worker. The display device 5 includes a monitor or a projector. For example, the processing device 3 causes the display device 5 to display information to support the fastening task. Hereinafter, the processing device causing the display device to display information also is called simply "the processing device displaying information".

The storage device 6 stores data necessary for the processing of the processing device 3, data obtained by the processing of the processing device 3, etc. For example, the storage device 6 stores data of the tool used in the task, data used to estimate the task location, data associated with each other by the processing device 3, etc.

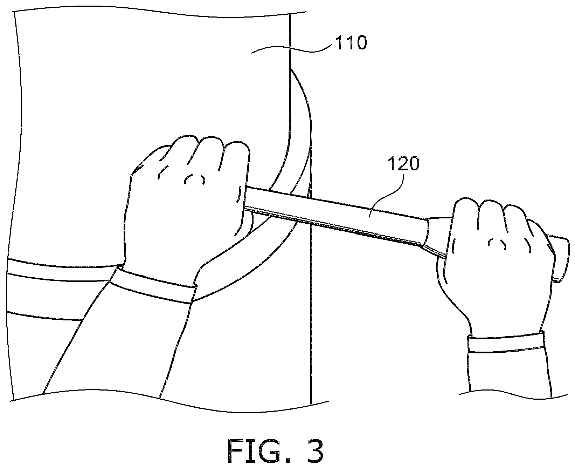

FIG. 2 is a schematic view illustrating an image. FIG. 3 is a schematic view illustrating a task.

FIG. 2 is an example of an image of a worker performing the task. The worker 100 is visible in an image IMG shown in FIG. 2. The worker 100 stands in front of a wall 101 and performs the task on an article 110. The article 110 is placed on a platform 102.

As an example, the worker 100 holds a wrench 120 with the right hand and tightens screws at fastening locations 111 to 114 of the article 110. The worker 100 tightens the screws in the order of the fastening location 111, the fastening location 112, the fastening location 113, and the fastening location 114. The screw-tightening at the fastening locations 111 to 114 is taken as one set; and four sets of screw-tightening are performed.

In the task, the processing device 3 estimates the fastening location at which the screw is being turned. Specifically, the processing device 3 performs hand tracking in the image IMG and measures the coordinates of the left and right hands of the worker 100. Hereinafter, at least one of the left hand or the right hand is called simply "the hand" when the left and right hands are not particularly differentiated. Each hand includes multiple joints such as a DIP joint, a PIP joint, an MP joint, a CM joint, etc. The coordinate of any of these joints is used as the coordinate of the hand. The centroid position of multiple joints may be used as the coordinate of the hand. Or, the center coordinate of the entire hand may be used as the coordinate of the hand.

When the screw is turned with the wrench 120 as shown in FIG. 3, one hand grips the head of the wrench 120; and the other hand grips the grip of the wrench 120. Therefore, during the task, the hand that grips the head approaches one of the fastening locations 111 to 114. The coordinates of the fastening locations 111 to 114 are preregistered in the storage device 6. The processing device 3 calculates the distances between the hands of the worker 100 and the fastening locations 111 to 114. When the distance between one of the hands of the worker 100 and one of the fastening locations 111 to 114 falls below a preset threshold, the processing device 3 estimates that the screw is being turned at the one of the fastening locations 111 to 114. Hereinafter, the fastening location among one or more fastening locations at which it is estimated that the screw is being turned is called the "task location".

An estimation model for estimating the task location based on the image may be prepared. The estimation model is pretrained to output an estimation result of the task location according to the input of the image. It is favorable for the estimation model to include a neural network (particularly, a convolutional neural network). The processing device 3 inputs the image to the estimation model and obtains the estimation result of the task location from the estimation model.

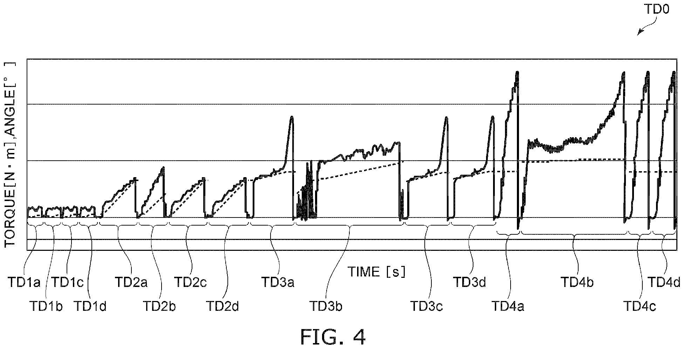

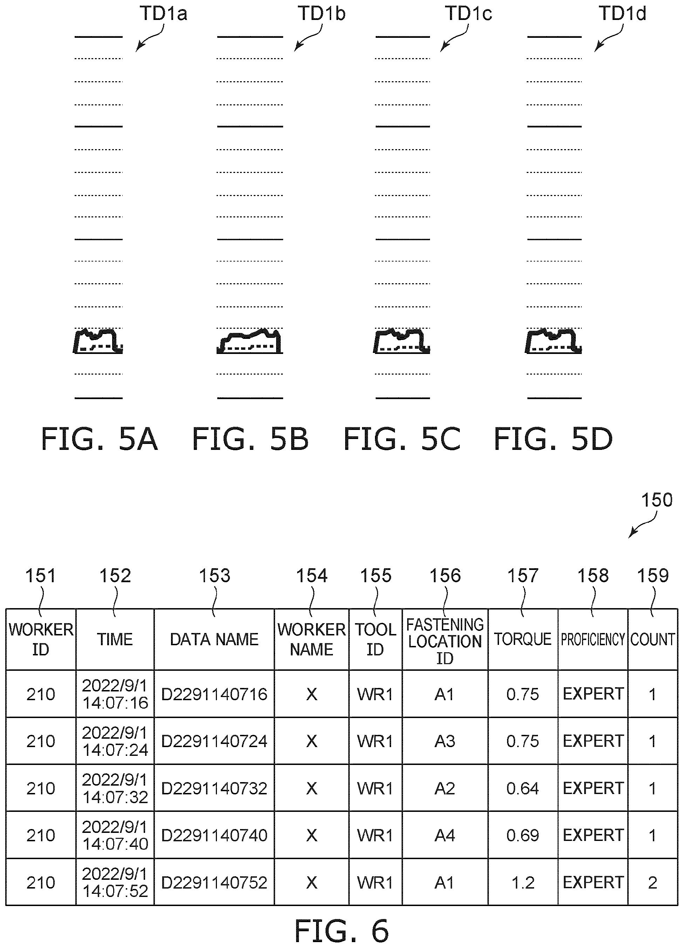

FIG. 4 and FIGS. 5A to 5D are graphs illustrating time-series data.

During the task, for example, the time-series data shown in FIG. 4 is acquired by the wrench 120. In FIG. 4, the solid line illustrates the torque detected by the wrench 120. The broken line illustrates the rotation angle detected by the wrench 120. The horizontal axis is time; and the vertical axis is the magnitude of the torque and the magnitude of the rotation angle.

When the task location is estimated, the processing device 3 uses the imaging time of the image used in the estimation as the time at which the screw was turned at the task location. The processing device 3 refers to the times at which the torques were detected in the time-series data. Based on the time at which the task was being performed and the times at which the torques were detected, the processing device 3 extracts, from the time-series data, the data when the screw was being turned at the task location.

For example, within overall time-series data TD0, the periods during which the screws were being turned respectively at the fastening locations 111 to 114 are designated. The processing device 3 extracts, from the time-series data TD0, time-series data TD1a to TD1d, time-series data TD2a to TD2d, time-series data TD3a to TD3d, and time-series data TD4a to TD4d of each period. The time-series data TD1a, TD2a, TD3a, and TD4a are the torque detected for the tightening of the screw at the fastening location 111 for the first, second, third, and fourth screw-tightening. This is similar for the other time-series data as well. For example, time-series data TD1b, TD2b, TD3b, and TD4b are the torque detected for the tightening of the screw at the fastening location 112 respectively for the first, second, third, and fourth screw-tightening.

As shown in FIGS. 5A to 5D, the processing device 3 extracts, from the overall time-series data TD0, the time-series data of the periods during which the screws are being turned at the fastening locations. In the illustrated example, the time-series data TD1a, TD1b, TD1c, and TD1d are extracted. The processing device 3 associates the data related to the fastening locations 111 to 114 with the time-series data TD1a to TD1d.

As an example, it is estimated that a screw is being turned at the fastening location 111 based on one or more images (a first image) imaged at some time. The processing device 3 extracts, from the time-series data TD0, the time-series data TD1a (first time-series data) when the screw is being turned at the fastening location 111 (a first task location). Based on another image (a second image) imaged after the first image, it is estimated that the screw is being turned at the fastening location 112. The processing device 3 extracts, from the time-series data TD0, the time-series data TD1b (second time-series data) when the screw is being turned at the fastening location 112 (a second task location).

In the example shown in FIGS. 2 and 4, screw-tightening is repeated 4 sets at each of the fastening locations 111 to 114. Therefore, the periods in which the screws were being turned at the fastening locations 111 to 114 also are designated for the data after the time-series data TD1a to TD1d. As a result, the processing device 3 extracts, from the time-series data TD0, the time-series data TD2a to TD2d, the time-series data TD3a to TD3d, and the time-series data TD4a to TD4d for the periods.

FIG. 6 is a table illustrating a database.

For example, as shown in FIG. 6, the processing device 3 associates the data. The table 150 shown in FIG. 6 includes a worker ID 151, a time 152, a data name 153, a worker name 154, a tool ID 155, a fastening location ID 156, a torque 157, a proficiency 158, and a count 159. The worker ID 151 is the identification information of the worker that performed the task. The time 152 is the time at which the task was performed, and is based on the time at which the image was imaged and the time at which the torque was detected. The data name 153 is the name of the extracted time-series data. The worker name 154 is the name of the worker that performed the task. The tool ID 155 is the identification information of the tool used in the task. The fastening location ID 156 is the identification information of the fastening location at which the screw is turned. The torque 157 is the maximum value of the torque detected when the screw was turned at the fastening location. The proficiency 158 indicates the proficiency of the worker. The count 159 is the number of times that the screw was tightened at the fastening location. In the example shown in FIGS. 2 and 5, the screw was tightened 4 times at one fastening location. Therefore, one of the numerical values "1" to "4" is registered in the count 159. The count is counted by the tool 2 or the processing device 3.

Advantages of the embodiment will now be described.

Time-series data of tools may be used in various applications. For example, the waveform of the time-series data can be used to determine whether or not the task is normal. Or, the waveform of the time-series data can be used to determine whether or not the task is being efficiently performed. On the other hand, in the task, torque is continuously detected by the tool. Therefore, even when an abnormal waveform is included in the time-series data acquired by the tool, the location at which the screw was being turn when the data of the abnormal waveform was obtained cannot be discriminated. Therefore, it has been difficult to use the time-series data for such verification.

According to the embodiment of the invention, the task location at which the screw is being turned is estimated using the first image in which the task is visible. Also, the tool that turns the screw is used to acquire time-series data. Then, the data when the screw is being turned at the task location is extracted from the time-series data. As a result, the extracted time-series data can be associated with the data related to the task location. As a result, it can be discriminated which parts of the time-series data detected by the tool match which data of the screws turned at the fastening locations.

As described above, the extracted time-series data may be used to determine whether or not the task is normal. For example, the processing device 3 determines whether or not the torque of the extracted time-series data is greater than the preset first threshold. The processing device 3 determines whether or not the period (the length of time) of the extracted time-series data is greater than a preset second threshold. The second threshold for the period is different from the first threshold for the torque. The processing device 3 determines that the time-series data is abnormal when the torque is greater than the first threshold or when the period of the time-series data is greater than the second threshold.

For example, in the time-series data shown in FIG. 4, the time-series data TD3b has a longer period than the time-series data TD3a, TD3c, or TD3d. Similarly, the time-series data TD4b has a longer period than the time-series data TD4a, TD4c, or TD4d. Therefore, the time-series data TD3b and the time-series data TD4b are determined to be abnormal. The other time-series data is determined to be normal.

A pretrained first determination part may be used to determine whether or not the time-series data is normal. According to the input of the time-series data, the first determination part outputs a determination result indicating whether or not the time-series data is normal. For example, the first determination part classifies the time-series data into one of a normal class or an abnormal class. The first determination part outputs a certainty for each class. The class for which the highest certainty is obtained is the classification of the time-series data.

The first determination part includes a neural network. Favorably, the first determination part includes a recurrent neural network (RNN). To increase the accuracy of the determination, it is more favorable for the RNN to have a long short-term memory (LSTM) structure. Or, the first determination part may include a convolutional neural network (CNN). In such a case, the time-series data is converted into an image and then input to the first determination part. The first determination part outputs a determination result according to the shape, length, etc., of the time-series data in the image.

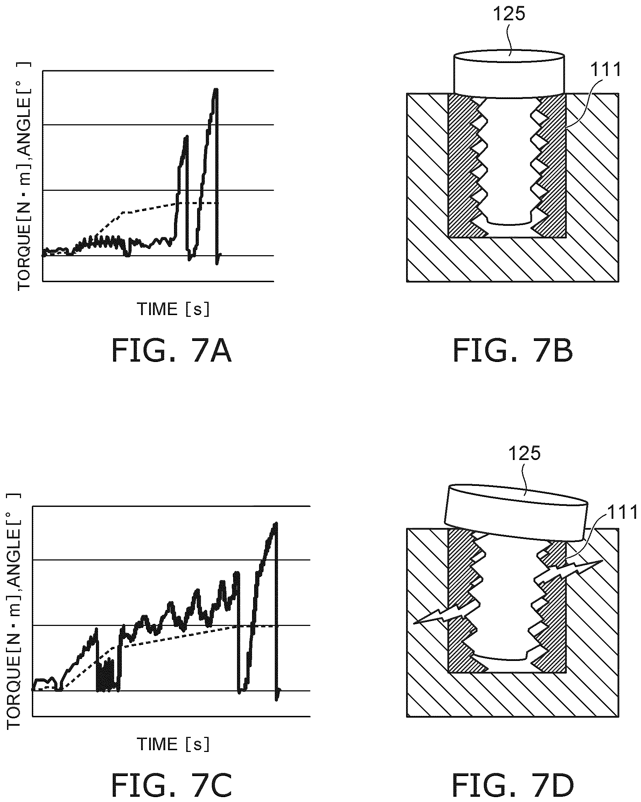

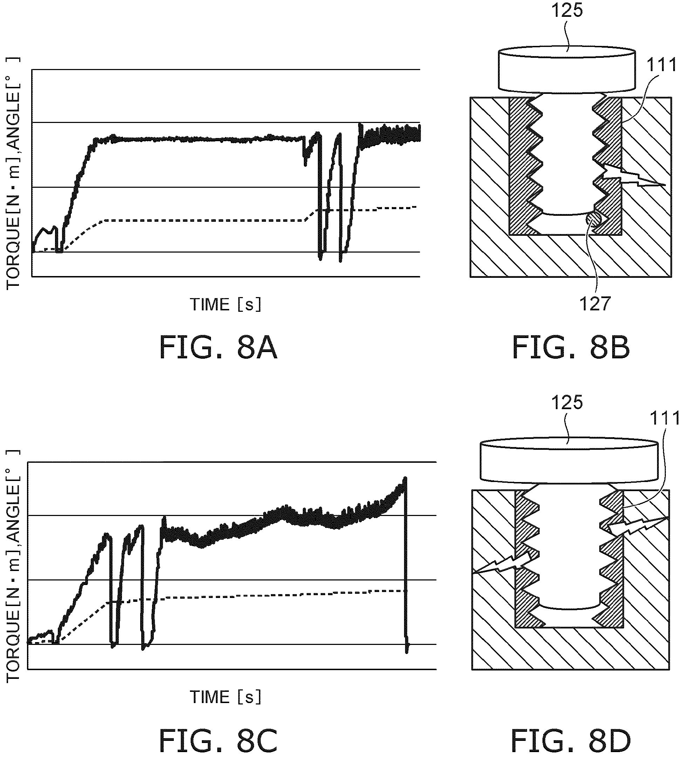

FIGS. 7A to 7D and FIGS. 8A to 8D are schematic views illustrating abnormality types.

The abnormality type may be determined by the first determination part. The abnormalities can be classified into the four types shown in FIGS. 7A, 7C, 8A, and 8C.

In the example shown in FIGS. 7A and 7B, a screw 125 is small with respect to the screw hole of the fastening location 111, or the screw hole is large with respect to the screw 125. Even when the screw 125 is completely tightened, the tip of the screw 125 does not reach the bottom part of the screw hole. In such a case, as shown in FIG. 7A, the torque in the first half of the screw-tightening is less than normal. Then, when the head of the screw 125 contacts the fastening location, the torque may increase abruptly. In this abnormality type, the fastening is insufficient, and the screw easily loosens.

In the example shown in FIGS. 7C and 7D, the screw 125 is inserted obliquely with respect to the screw hole. In such a case, a larger force than normal is required to turn the screw 125. Therefore, as shown in FIG. 7C, a larger torque than normal is detected. If the screw-tightening is continued in this state, there is a possibility that an excessive force may be applied to the fastening location 111; and the fastening location 111 may be damaged.

In the example shown in FIGS. 8A and 8B, foreign matter 127 is adhered to the screw 125 or inside the screw hole. In such a case, the foreign matter 127 obstructs the tightening of the screw 125. Therefore, as shown in FIG. 8A, a larger torque than normal is detected. If the screw-tightening is continued, there is a possibility that an excessive force may be applied to the fastening location 111 or the screw 125; and the fastening location 111 or the screw 125 may be damaged.

In the example shown in FIGS. 8C and 8D, the screw 125 is larger than the screw hole, or the screw hole is smaller than the screw 125. In such a case, as shown in FIG. 8C, the torque is larger torque than normal from the first half of the screw-tightening. Then, torque gradually increases as the screw 125 is turned. If the screw-tightening is continued, there is a possibility that an excessive force may be applied to the fastening location 111; and the fastening location 111 may be damaged.

The first determination part is trained to be able to determine abnormality types such as those shown in FIGS. 7A to 8D. In the training, abnormal time-series data is used as the input data; and annotation (labels) that indicate the abnormality types are used as the teaching data. By using the first determination part to determine the abnormality type, the worker can easily ascertain how to handle the abnormality.

To determine whether or not the time-series data is normal, both the comparison between the time-series data and the threshold and the determination by the first determination part may be performed. For example, the processing device 3 compares the torque in the extracted time-series data with the threshold, and compares the period of the time-series data with the threshold. As a result, it is determined whether or not the time-series data is normal. When the time-series data is determined to be abnormal, the processing device 3 inputs the time-series data to the first determination part. As a result, the abnormality type is determined by the first determination part.

Or, the processing device 3 may input the time-series data to the first determination part regardless of the determination result of the comparison with the threshold. When the time-series data is determined to be abnormal by one of the comparison with the threshold or the determination by the first determination part, the processing device 3 determines the time-series data to be abnormal.

The extracted time-series data may be used to determine the proficiency of the worker. "Proficiency" refers to the skill of the worker, and refers to how efficiently the task is performed. The processing device 3 uses a second determination part to determine the proficiency. According to the input of the time-series data, the second determination part determines the proficiency of the movement indicated by the time-series data. For example, the second determination part classifies the time-series data into one of the "expert" class or the "novice" class. The second determination part outputs the certainty for each class. The class for which the highest certainty is obtained is the classification of the time-series data. The second determination part may classify the time-series data into one of three or more classes.

The second determination part includes a neural network. Favorably, the second determination part includes an RNN. To increase the accuracy of the determination, it is more favorable for the RNN to have an LSTM structure. Or, the second determination part may include a CNN. In such a case, the time-series data is converted into an image and then input to the second determination part. The second determination part outputs a determination result according to the shape, length, etc., of the time-series data in the image.

For example, the time-series data when useless movement is included in the task is longer than the time-series data when there is no useless movement in the task. Also, the fluctuation of the length of time necessary for one screw-tightening is greater when useless movement is included in the task than when there is no useless movement in the task. The fluctuation of the waveform per screw-tightening also is greater when useless movement is included in the task than when there is no useless movement in the task.

The second determination part is pretrained to be able to output the proficiency according to the input of the time-series data. In the training, the time-series data is used as the input data; and annotations that indicate the proficiency of the time-series data are used as the teaching data. Because the proficiency is determined by the second determination part, the worker can easily ascertain the parts of the task that need to be improved.

The first determination part and the second determination part are prepared for each combination of the structure of the fastening location, the structure of the screw, the type of tool, the necessary torque, and the screw-tightening count. The structure of the fastening location is the diameter of the screw hole, the depth of the screw hole, etc. The structure of the screw is the diameter of the screw, the shape (the type) of the screw, etc. Each determination part may be prepared for each fastening location.

The data for training the determination parts may be prepared according to the embodiment of the invention. Processing in which a part of the time-series data is extracted from the overall time-series data such as that shown in FIG. 4 can be utilized to prepare the training data of the determination parts.

Specifically, the processing device 3 extracts the time-series data TD1a to TD1d from the time-series data TD0 and associates the time-series data TD1a to TD1d respectively with the fastening locations 111 to 114. The time-series data TD1a that is associated with the fastening location 111 can be utilized to train the determination parts used in the task of turning the screw at the fastening location 111. Similarly, the time-series data TD1b to TD1d that are associated with the fastening locations 112 to 114 can be utilized to train the determination parts used in the task of turning the screws at the fastening locations 112 to 114. In other words, according to the processing of the processing device 3, the annotation can be automatically performed for the data referenced when training for the extracted time-series data. It is noted that the determination parts used in the task of turning the screw may be shared between the fastening locations when the tool used to turn the screw, the structure of the screw hole, the necessary torque, etc., respectively are the same between the fastening locations 111 to 114.

Other annotation also may be assigned to the extracted time-series data. For example, the processing device 3 uses the threshold to determine whether or not the extracted time-series data is normal. The processing device 3 assigns an annotation indicating normal or abnormal to the time-series data. Subsequently, a worker or a manager confirms the time-series data determined to be abnormal, and assigns an annotation indicating the specific type of the abnormality. The data for training the first determination part is prepared thereby. Even when an abnormality is determined by the processing device 3, when the worker or the manager determines the time-series data to be normal, the worker or the manager replaces the abnormal annotation with a normal annotation. The processing device 3 may annotate the extraction time-series data with the proficiency of the worker that performed the task. As shown in FIG. 6, the proficiency is preregistered for each worker in the database. The data for training the second determination part is prepared thereby.

The determination by the first determination part and the determination by the second determination part may be performed for the time-series data for each screw-tightening such as those shown in FIG. 5. Or, multiple sets of time-series data may be combined for each fastening location; and the determination may be performed for the combined time-series data.

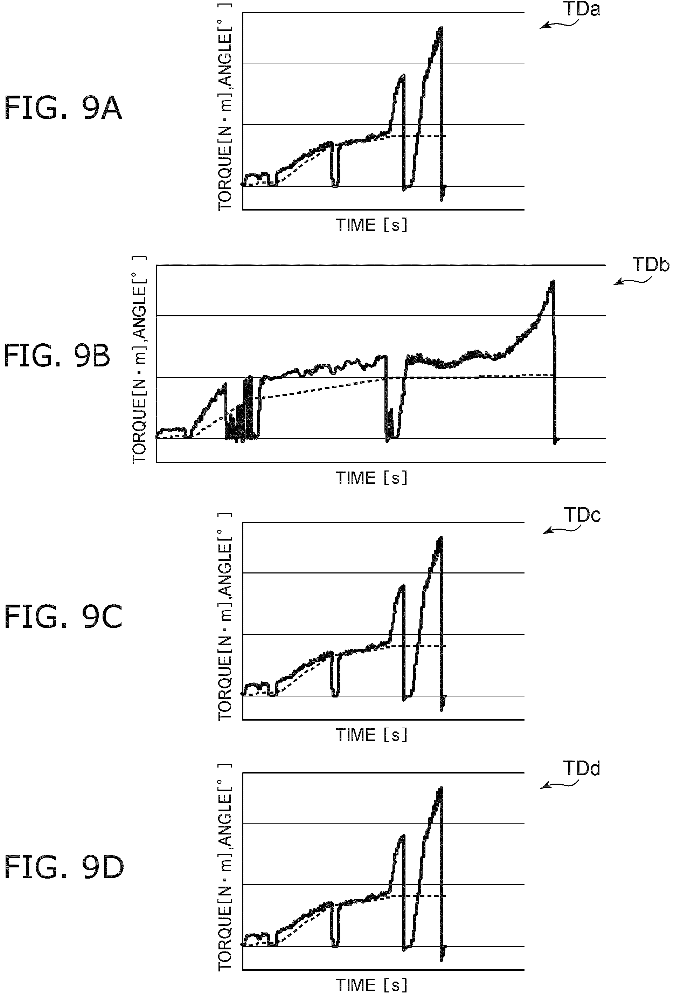

FIGS. 9A to 9D are graphs illustrating the time-series data. The time-series data TD1a, TD2a, TD3a, and TD4a among the time-series data TD0 shown in FIG. 4 is obtained in the screw-tightening at the fastening location 111, and is associated with the fastening location 111. The processing device 3 combines the time-series data associated with a common fastening location. As a result, as shown in FIG. 9A, time-series data TDa is obtained in which the time-series data TD1a, TD2a, TD3a, and TD4a is combined. Similarly, the processing device 3 combines the time-series data obtained in the screw-tightening at the fastening locations 112 to 114. As a result, time-series data TDb to TDd are obtained as shown in FIGS. 9B to 9D.

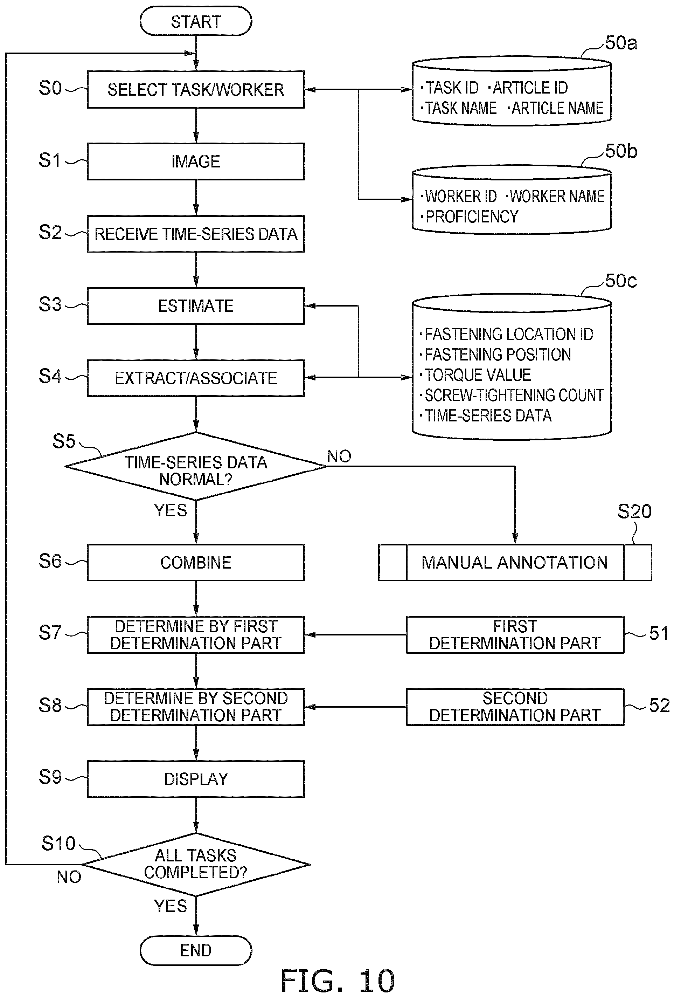

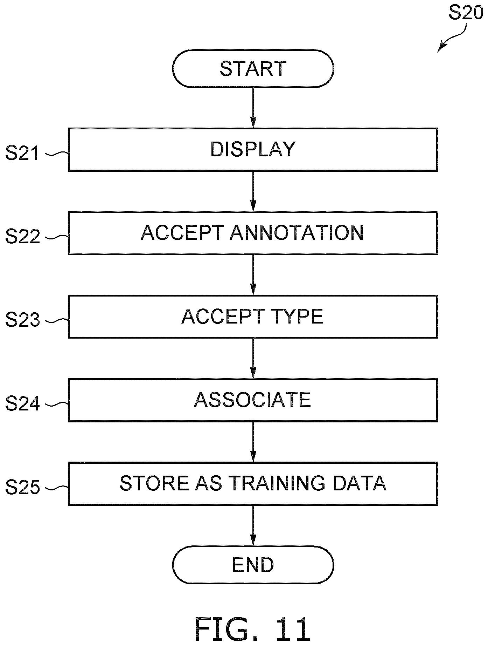

FIGS. 10 and 11 are flowcharts showing a processing method according to the embodiment.

The storage device 6 stores task master data 50a, worker master data 50b, fastening location master data 50c, a first determination part 51, and a second determination part 52 shown in FIG. 10. The task master data 50a, the worker master data 50b, the fastening location master data 50c, the first determination part 51, and the second determination part 52 are prepared before the screw-tightening.

First, the processing device 3 accepts the selection of the task and the selection of the worker (step S0). The processing device 3 refers to the task master data 50a in the selection of the task.

The task ID, the task name, the article ID, and the article name are registered in the task master data 50a. The processing device 3 can accept one of the task ID, the task name, the article ID, or the article name as the selection of the task. The worker ID, the worker name, and the proficiency are registered in the worker master data 50b. The processing device 3 can accept the worker ID or the worker name as the selection of the worker.

For example, the task and the worker are selected by the worker. The task to be performed may be instructed by a higher-level system; and the processing device 3 may accept the selection according to the instruction. The processing device 3 may determine the task to be performed based on data obtained from the imaging device 1, a sensor located in the workplace, a reader located in the workplace, etc. The processing device 3 selects the task based on the determination result. The task and the worker may be automatically selected based on the prepared schedule, etc. The worker may be pre-associated for each task. In such a case, the worker also is automatically selected when the task is selected.

When the task and the worker are selected, the imaging device 1 starts imaging (step S1). The imaging device 1 repeatedly acquires the images during the task. When the task is started, the processing device 3 receives time-series data of the torque from the tool 2 (step S2). The processing device 3 uses the images to estimate the task location at which the screw is being turned (step S3). The processing device 3 extracts, from the time-series data, the time-series data while the screw is being turned. The processing device 3 associates the extracted time-series data and the data related to the task location (step S4). The processing device 3 also associates the worker ID, the worker name, the proficiency, etc., with the extracted time-series data.

When the task location is estimated, the processing device 3 refers to the fastening location master data 50c. The fastening location master data 50c stores the fastening location ID; and the fastening position (the position of the screw hole), the necessary torque value, and the necessary screw-tightening count are registered for each fastening location ID in the fastening location master data 50c. When the coordinate of the hand is used in the estimation, the processing device 3 can use the fastening position registered in the worker master data 50b to estimate the task location. The processing device 3 associates the fastening location ID with the extracted time-series data and stores the extracted time-series data in the fastening location master data 50c.

When the time-series data is extracted, the processing device 3 uses the first threshold and the second threshold to determine whether or not the time-series data is normal (step S5). In other words, the processing device 3 determines whether or not the torque included in the time-series data is greater than the first threshold, and determines whether or not the period of the time-series data is greater than the second threshold. The processing device 3 determines the time-series data to be abnormal when the torque is greater than the first threshold, or when the period is greater than the second threshold. When the time-series data is abnormal, manual annotation of the time-series data, which is described below, is performed (step S20).

When the time-series data is determined to be normal based on the threshold, the processing device 3 combines the sets of time-series data that are associated with the same fastening location (step S6). As a result, as shown in FIGS. 9A to 9D, multiple sets of time-series data are combined to obtain one set of time-series data for each fastening location. The processing device 3 inputs the combined time-series data to the first determination part 51. The processing device 3 determines whether or not the time-series data is normal based on the output from the first determination part 51 (step S7). The processing device 3 inputs the combined time-series data to the second determination part 52. The processing device 3 determines the proficiency of the worker based on the output from the second determination part 52 (step S8).

The processing device 3 displays information in the display device 5 based on the determination result of the first determination part 51 or the second determination part 52 (step S9). As an example, when the time-series data is determined to be abnormal, the processing device 3 displays the abnormality type during the task. When a countermeasure is preregistered for each abnormality type, the processing device 3 also may display the countermeasure. By displaying the information in real time in the task, the worker can promptly notice the occurrence of the abnormality. Prompt rework of the task can be performed, and wasted work can be reduced. When the time-series data is determined to be normal, the processing device 3 may display information indicating that the task is normal, or may not display information. By omitting the display when the task is normal, the worker can easily concentrate on the task.

As another example, when the proficiency is determined to be low based on the time-series data, the processing device 3 displays the determination result. The determination result of the proficiency may be displayed in the task, or may be displayed after the task. When the proficiency of the worker is determined to be high, the processing device 3 may display information indicating that the proficiency is high, or may not display information.

The processing device 3 determines whether or not all of the tasks are completed (step S10). When there are still incomplete tasks, the processing device 3 again accepts the selection of the task in step S0.

FIG. 11 is a flowchart showing processing of the manual annotation of step S20. First, the processing device 3 displays the time-series data determined to be abnormal toward a user (step S21). The user has sufficient knowledge to be able to determine whether or not the time-series data is normal. The user determines whether or not the displayed time-series data is normal. The user uses the input device 4 to assign an annotation indicating normal or abnormal to the time-series data. The processing device 3 accepts the assigned annotation (step S22). When an abnormal annotation is assigned, the user uses the input device 4 to input the abnormality type to the processing device 3. The processing device 3 accepts the abnormality type that is input (step S23).

The processing device 3 associates the input annotation with the time-series data (step S24). The abnormality type also is associated with the time-series data to which the abnormal annotation is assigned. The processing device 3 stores the time-series data to which the annotation is associated in the storage device 6 as training data of the first determination part 51 (step S25).

According to the flowchart shown in FIGS. 10 and 11, the normality of the time-series data and the proficiency of the worker are determined. According to the processing of step S4, the annotation necessary to train the first determination part 51 and the second determination part 52 is automatically assigned to the time-series data. According to the processing of step S5, the processing of step S20 is performed for the time-series data determined to be abnormal. As a result, the annotation is assigned with higher accuracy, and the abnormality type also is assigned. As a result, data that is more suited to the training can be prepared.

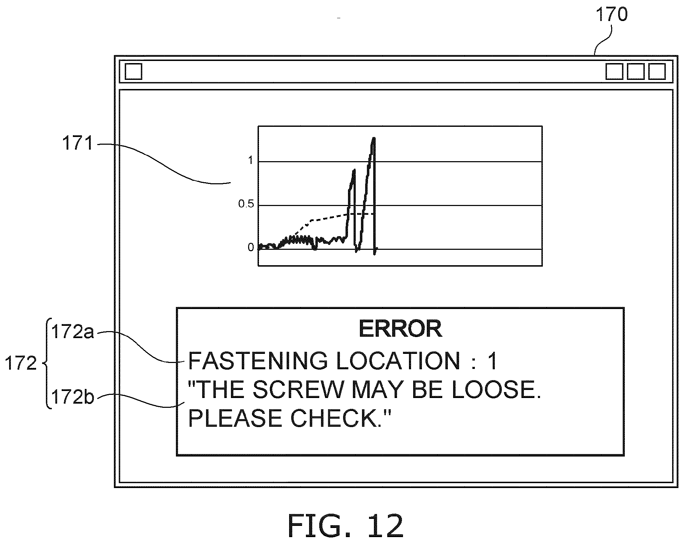

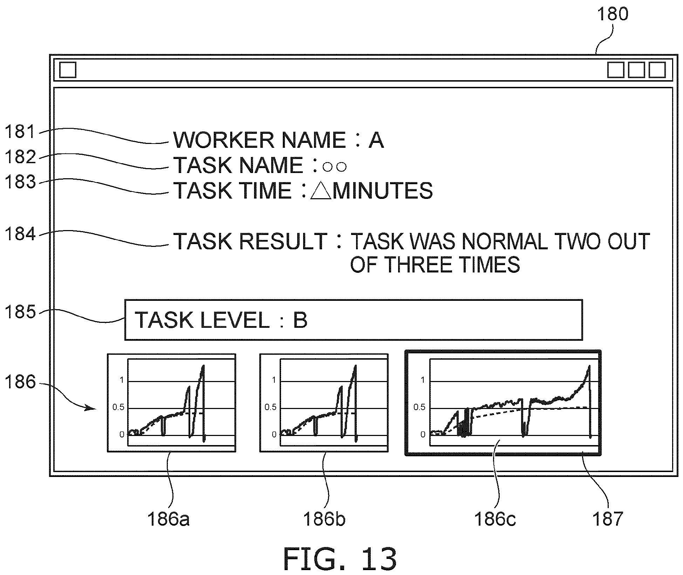

FIGS. 12 and 13 are schematic views showing display examples according to the processing device according to the embodiment.

Based on the determination result of the first determination part 51 and the determination result of the second determination part 52, the processing device 3 displays a graphical user interface (GUI) in the display device 5.

FIG. 12 shows the GUI 170 displayed based on the determination result of the first determination part 51. Time-series data 171 and an alert 172 are displayed in the GUI 170. The time-series data 171 is data obtained in the task being performed. The alert 172 includes an estimated fastening location 172a and a message 172b. The message 172b indicates the abnormality type based on the determination result of the first determination part 51. The GUI 170 is displayed in the task when the time-series data is determined to be abnormal. Based on the display of the GUI 170, the worker can know in real time that an abnormality of the task has occurred.

FIG. 13 shows the GUI 180 that is displayed based on the determination result of the first determination part 51 and the determination result of the second determination part 52. A name 181 of the worker that performed the task, a task name 182, a task time 183, a determination result 184 of the normality, a determination result 185 of the proficiency, and time-series data 186 are displayed in the GUI 180. The task time 183 is the period of the time-series data for each fastening location. The determination result 184 indicates the normality of the task performed. In the illustrated example, the number of normal tasks or abnormal tasks among the tasks performed are shown. The determination result 184 is counted based on the determination result of the first determination part 51. The determination result 185 indicates the proficiency of the task performed based on the determination result of the second determination part 52. The time-series data 186 is the time-series data obtained in the task. Based on the display of the GUI 180, the worker can easily ascertain the accuracy of the task, the speed of the task, etc. The display of the GUI 180 also can be utilized to provide feedback to the worker if anything needs to be improved in the task.

Time-series data 186a to 186c is displayed in the example shown in FIG. 13. The time-series data 186a and the time-series data 186b are determined to be normal; and the time-series data 186c is determined to be abnormal. The display of the time-series data 186c determined to be abnormal may be different from the display of the time-series data 186a and the display of the time-series data 186b. In the illustrated example, the time-series data 186c is enhanced by being marked with a rectangular object 187. As a result, the worker can easily ascertain the task that was abnormal. A mark or the like may be used instead of an object. The color of the time-series data determined to be abnormal may be different from the color of the time-series data determined to be normal.

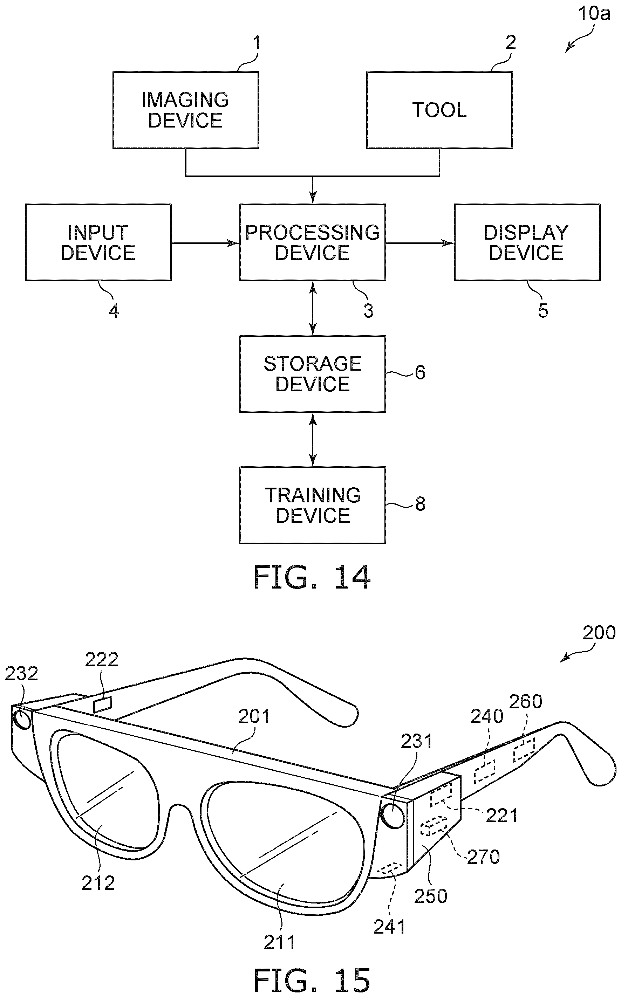

FIG. 14 is a schematic view showing a configuration of a processing system according to a modification of the embodiment.

Compared to the processing system 10 shown in FIG. 1, the processing system 10a shown in FIG. 14 further includes a training device 8. Other than the training device 8, the functions of the imaging device 1, the tool 2, the processing device 3, the input device 4, the display device 5, and the storage device 6 of the processing system 10a are substantially the same as the functions of those components of the processing system 10.

The training device 8 trains the first determination part 51 and the second determination part 52. In the training, the training data automatically annotated by the processing device 3 and the training data prepared by the manual annotation (step S20) are used. The training device 8 stores the trained first determination part 51 and the trained second determination part 52 in the storage device 6. The processing device 3 uses the first determination part 51 and the second determination part 52 trained by the training device 8 to determine the time-series data.

The timing of the training by the training device 8 is arbitrary. The training device 8 may train the first determination part 51 or the second determination part 52 each time new training data is prepared. The training device 8 may train the first determination part 51 or the second determination part 52 at the timing of a preset number of sets of training data being stored in the storage device 6. The training device 8 may train the first determination part 51 or the second determination part 52 at the timing when a preset period has elapsed from the final training. The training device 8 may be prepared separately from the processing device 3, or the processing device 3 may include a function as the training device 8.

FIG. 15 is a schematic view illustrating a mixed reality device.

The processing system 10 shown in FIG. 1 may be realized as a mixed reality (MR) device. For example, the MR device 200 shown in FIG. 15 includes a frame 201, a lens 211, a lens 212, a projection device 221, a projection device 222, an image camera 231, a depth camera 232, a sensor 240, a microphone 241, a processing device 250, a battery 260, and a storage device 270.

The image camera 231 and the depth camera 232 are examples of the imaging device 1. The processing device 250 is an example of the processing device 3. The microphone 241 is an example of the input device 4. The projection device 221 and the projection device 222 are examples of the display device 5. The storage device 270 is an example of the storage device 6.

In the illustrated example, the MR device 200 is a binocular head mounted display. Two lenses, i.e., the lens 211 and the lens 212, are fit into the frame 201. The projection device 221 and the projection device 222 respectively project information onto the lenses 211 and 212.

The projection device 221 and the projection device 222 display a recognition result of a hand of a worker, a virtual object, etc., on the lenses 211 and 212. Only one of the projection device 221 or the projection device 222 may be included; and information may be displayed on only one of the lens 211 or the lens 212.

The lens 211 and the lens 212 are light-transmissive. The worker can visually recognize reality via the lenses 211 and 212. Also, the worker can visually recognize the information projected onto the lenses 211 and 212 by the projection devices 221 and 222. Information is displayed to overlap real space by being projected by the projection devices 221 and 222.

The image camera 231 obtains a two-dimensional image by detecting visible light. The depth camera 232 irradiates infrared light and obtains a depth image based on the reflected infrared light. The sensor 240 is a six-axis detection sensor and is configured to detect angular velocities in three axes and accelerations in three axes. The microphone 241 accepts an audio input.

The processing device 250 controls components of the MR device 200. For example, the processing device 250 controls the display by the projection devices 221 and 222. The processing device 250 detects movement of the visual field based on the detection result of the sensor 240. The processing device 250 changes the display by the projection devices 221 and 222 according to the movement of the visual field. The processing device 250 also is configured to perform various processing by using data obtained from the image camera 231 and the depth camera 232, data of the storage device 270, etc.

The battery 260 supplies power necessary for the operations to the components of the MR device 200. The storage device 270 stores data necessary for the processing of the processing device 250, data obtained by the processing of the processing device 250, etc. The storage device 270 may be located outside the MR device 200, and may communicate with the processing device 250.

The MR device according to the embodiment is not limited to the illustrated example, and may be a monocular head mounted display. The MR device may be an eyeglasses-type as illustrated, or may be a helmet-type.

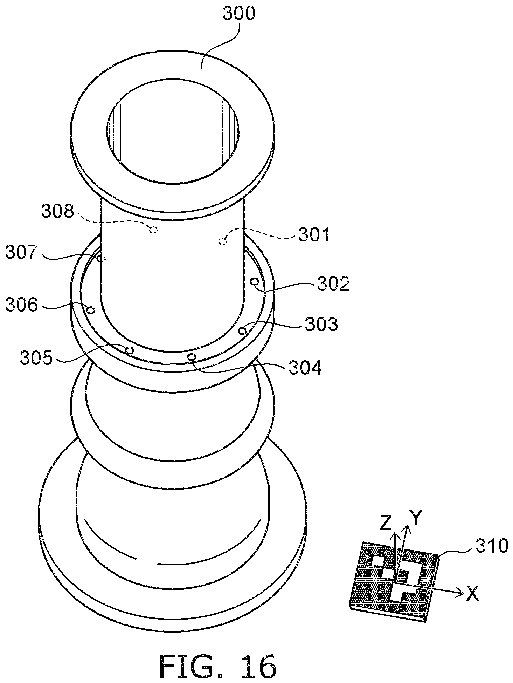

FIG. 16 is a schematic view illustrating an article that is a task object.

For example, a fastening task is performed on an article 300 shown in FIG. 16. The article 300 is a hollow tubular member and includes fastening locations 301 to 308. The worker uses a wrench to fasten screws respectively at the fastening locations 301 to 308.

A marker 310 is located proximate to the task object. In the illustrated example, the marker 310 is an AR marker. As described below, the marker 310 is provided for setting the origin of the three-dimensional coordinate system. Instead of the AR marker, a one-dimensional code (a barcode), a two-dimensional code (a QR code (registered trademark)), etc., may be used as the marker 310. Or, instead of a marker, the origin may be indicated by a hand gesture. The processing device 250 sets the three-dimensional coordinate system referenced to multiple points indicated by the hand gesture.

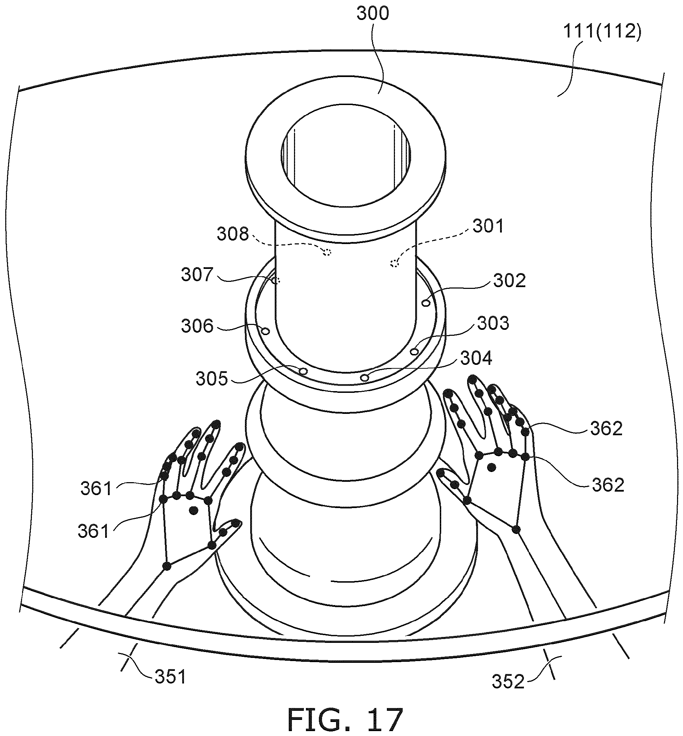

FIGS. 17 to 20 are schematic views for describing processing according to the mixed reality device according to the embodiment.

When starting the fastening task, the image camera 231 and the depth camera 232 image the marker 310. The processing device 250 recognizes the marker 310 based on the captured image. The processing device 250 sets the three-dimensional coordinate system by using the position of the marker 310 as a reference.

The image camera 231 and the depth camera 232 image the article 300, the left hand of the worker, and the right hand of the worker. The processing device 250 recognizes the left hand and the right hand based on the captured image. The processing device 250 causes the projection devices 221 and 222 to display the recognition result on the lenses 211 and 212.

For example, as shown in FIG. 17, the processing device 250 displays the recognition result of a left hand 351 and the recognition result of a right hand 352 to overlap the hands in real space. In the illustrated example, multiple virtual objects 361 and multiple virtual objects 362 are displayed as the recognition results of the left and right hands 351 and 352. The multiple virtual objects 361 respectively indicate multiple joints of the left hand 351. The multiple virtual objects 362 respectively indicate multiple joints of the right hand 352. Instead of joints, virtual objects that represent the surface shape of the left hand 351 and the surface shape of the right hand 352 may be displayed.

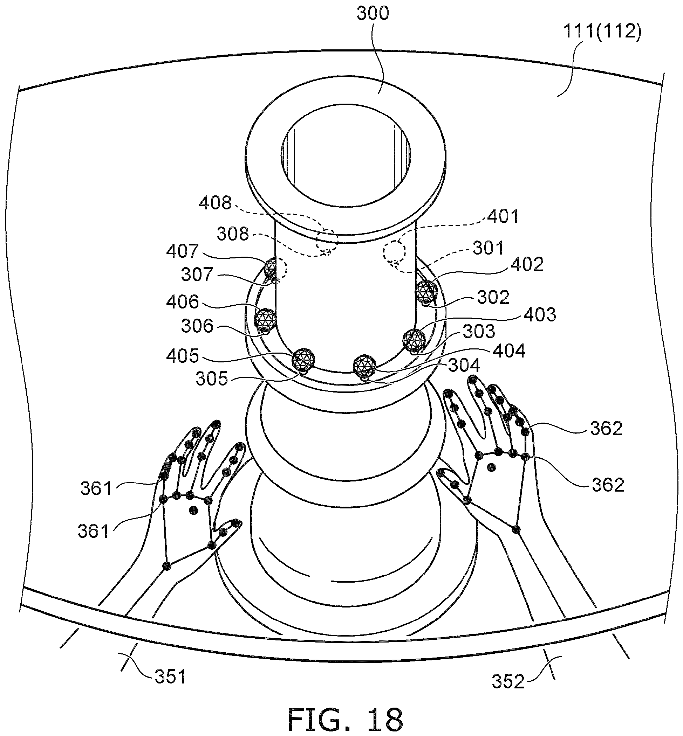

As shown in FIG. 18, the processing device 250 displays virtual objects 401 to 408 corresponding to the fastening locations 301 to 308. The virtual objects 401 to 408 respectively indicate the positions at which the hand of the worker is to be placed when fastening the fastening locations 301 to 308.

The positions displayed by the virtual objects 401 to 408 are preregistered using a coordinate system based on the origin of the marker 310. For example, the virtual object is displayed at a position separated from the coordinate of each fastening location by a prescribed distance. The "prescribed distance" is set by considering the length of the screw, the size of the head of the wrench, etc.

In the illustrated example, the virtual objects 401 to 408 are spheres. The shapes, colors, etc., of the virtual objects are arbitrary as long as the worker can visually recognize and discriminate the virtual objects 401 to 408 from real space.

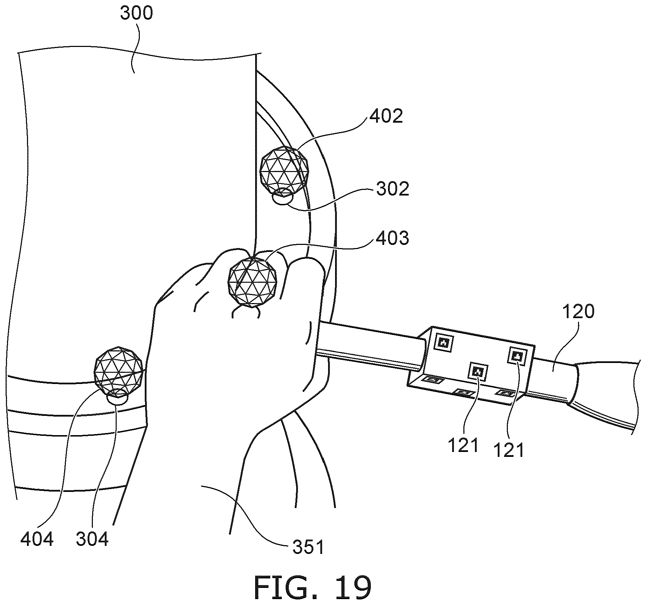

As an example, the worker fastens a screw at the fastening location 303. In such a case, the worker places the screw in the screw hole of the fastening location 303. Then, the worker holds the grip of the wrench 120 with the right hand. The worker causes the tip (the head) of the wrench 120 to which a socket is mounted to engage the screw. As shown in FIG. 19, the worker rotates the wrench 120 with the right hand 352 while pressing the head of the wrench 120 with the left hand 351. The screw is tightened thereby.

In the series of operations described above, the processing device 250 determines whether or not one of the left hand 351 or the right hand 352 contacts the virtual object. According to the task example above, the left hand 351 that presses the head of the wrench contacts the virtual object 403 when tightening the screw. When the left hand 351 is determined to contact the virtual object 403, the processing device 250 estimates that the screw is being turned at the fastening location 303 corresponding to the virtual object 403.

Instead of the contact between the hand and the virtual object, it may be determined whether or not a tool contacts one of the virtual objects. For example, as shown in FIG. 19, multiple markers 121 are mounted to the wrench 120. The processing device 250 recognizes the multiple markers 121 in an image. The processing device 250 calculates the position of the head of the wrench 120 based on the positional relationship of the multiple markers 121. The processing device 250 uses the calculated position of the head to determine whether or not the wrench 120 contacts the virtual object.

The contact between the prescribed object and the virtual object is determined based on the distance between the prescribed object and the virtual object. The processing device 250 calculates the distance between the coordinate of the virtual object and the coordinate of the prescribed object. The processing device 250 determines that the prescribed object contacts the virtual object when the distance is less than a preset threshold.

As an example as shown in FIGS. 18 and 19, the threshold is the size of the virtual object. In the example, the center of a sphere is positioned at the coordinate of the virtual object. The diameter of the virtual object corresponds to the threshold. The distance between the virtual object and the prescribed object is less than the threshold when the virtual object in the virtual space overlaps the prescribed object in real space. As a result, the prescribed object is determined to contact the virtual object.

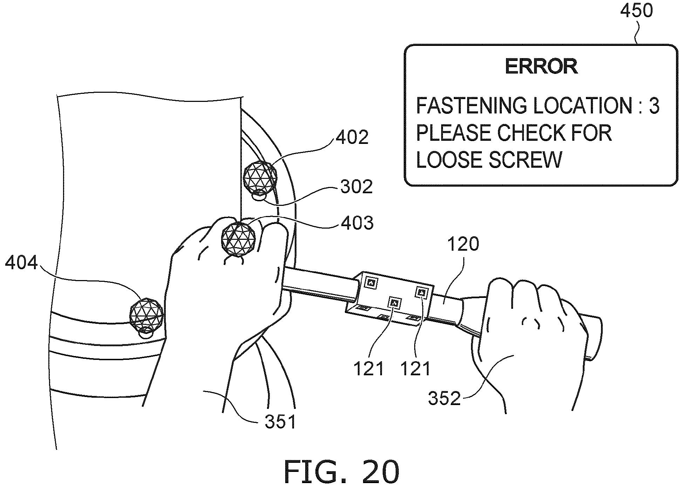

When the task location is estimated, the extraction of the time-series data, annotation of the extracted time-series data, the determination of the time-series data, etc., are performed based on the estimation result. When the time-series data is determined to be abnormal by the first determination part 51, for example, an alert 450 is displayed proximate to the wrench 120 or the hand as shown in FIG. 20. The worker can confirm the alert 450 while performing the task.

By using the MR device, the worker can visually recognize the information output from the processing system 10 while performing the task. It is unnecessary for the worker to move the face or the visual field to confirm the information output from the processing system 10. Therefore, the work efficiency of the worker can be further increased.

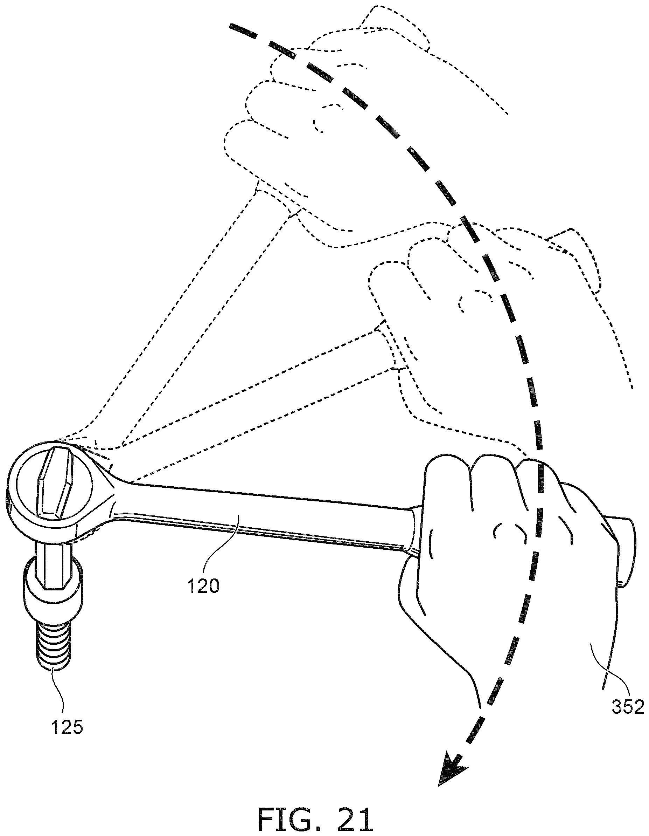

FIG. 21 is a schematic view for describing other processing according to the mixed reality device according to the embodiment.

According to the method described above, the fastening location at which the screw is being turned is estimated based on the contact between the virtual object and the prescribed object. For example, the fastening location at which the screw is being turned is estimated based on the contact between the virtual object and the hand pressing the head of the tool. Instead of this method, the fastening location at which the screw is being turned may be estimated based on the movement of the hand gripping the grip of the tool.

For example, as shown in FIG. 21, the hand that grips the grip moves in an arc-like shape while turning the screw 125 with the wrench 120. The center of the circular arc is positioned at the head of the wrench 120. The processing device 250 utilizes the movement of the hand to calculate the center coordinate of the rotation of the tool. One of the following first to third methods can be used to calculate the center coordinate.

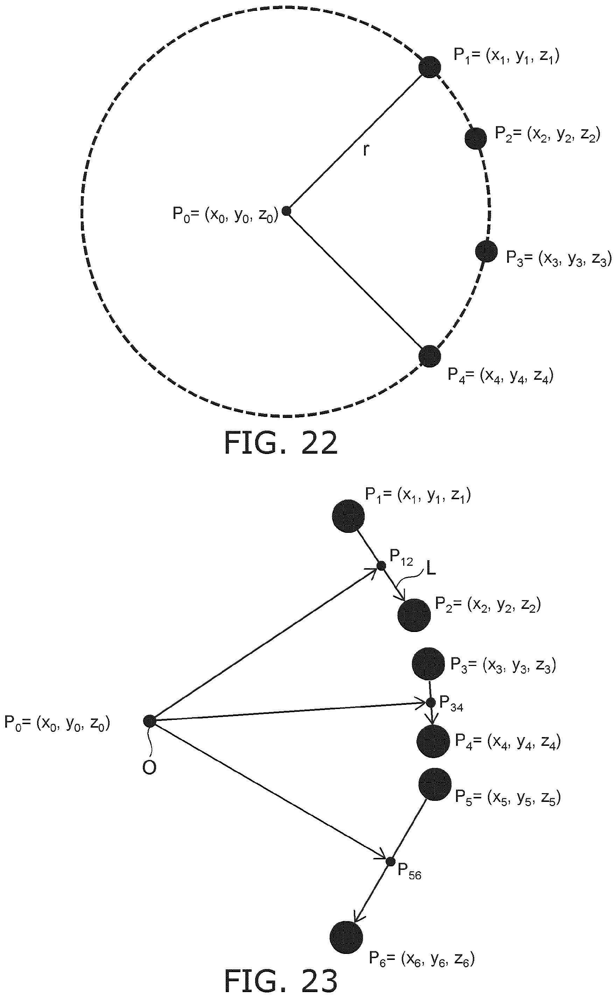

FIGS. 22 to 24 are figures for describing methods for calculating the center coordinate.

In the first method, the processing device 250 extracts four mutually-different coordinates from the multiple coordinates that are measured. The processing device 250 calculates a sphere that passes through the four coordinates. The sphere is represented by the formula of a spherical surface. Here, as shown in FIG. 22, the four coordinates are taken as $P_1(x_1, y_1, z_1)$, $P_2(x_2, y_2, z_2)$, $P_3(x_3, y_3, z_3)$, and $P_4(x_4, y_4, z_4)$. The coordinate of the center of the sphere is taken as $P_0(x_0, y_0, z_0)$. The radius of the sphere is taken as $r$. $r$ corresponds to the distance from the head of the wrench 120 to the hand (the grip) and is preregistered. In such a case, the formula of a spherical surface is represented by the following Formula (1). In Formula (1), $k, l, m$, and $n$ are constants.

$$[\text{Formula 1}]$$
$$(x - x_0)^2 + (y - y_0)^2 + (z - z_0)^2 = r^2$$

The following Formula (2) is obtained by substituting the coordinate $P_1$ in Formula (1). Formula (2) is rewritten as Formula (3).

$$[\text{Formula 2}]$$
$$(x_1 - x_0)^2 + (y_1 - y_0)^2 + (z_1 - z_0)^2 = r^2$$

$$x_0^2 + y_0^2 + z_0^2 - 2x_1x_0 - 2y_1y_0 - 2z_1z_0 + x_1^2 + y_1^2 + z_1^2 = 0 \qquad [\text{Formula 3}]$$

Similarly, the following Formulas (4) to (6) are obtained by substituting the coordinates $P_2$ to $P_4$ in Formula (1).

$$x_0^2 + y_0^2 + z_0^2 - 2x_2x_0 - 2y_2y_0 - 2z_2z_0 + x_2^2 + y_2^2 + z_2^2 = 0 \qquad [\text{Formula 4}]$$

$$x_0^2 + y_0^2 + z_0^2 - 2x_3x_0 - 2y_3y_0 - 2z_3z_0 + x_3^2 + y_3^2 + z_3^2 = 0 \qquad [\text{Formula 5}]$$

$$x_0^2 + y_0^2 + z_0^2 - 2x_4x_0 - 2y_4y_0 - 2z_4z_0 + x_4^2 + y_4^2 + z_4^2 = 0 \qquad [\text{Formula 6}]$$

The coordinate $P_0(x_0, y_0, z_0)$ is calculated by solving Formulas (3) to (6) as simultaneous equations. The center of a sphere passing through the four coordinates $P_1(x_1, y_1, z_1)$, $P_2(x_2, y_2, z_2)$, $P_3(x_3, y_3, z_3)$, and $P_4(x_4, y_4, z_4)$ is obtained thereby. The processing device 250 uses the coordinate $P_0(x_0, y_0, z_0)$ of the center of the sphere as the center coordinate of the rotation of the wrench 120.

The processing device 250 may extract multiple combinations of four coordinates. The processing device 250 calculates the coordinates of the center of the sphere for each combination. As a result, the coordinate of the center is calculated for each of the multiple spheres. Error exists in the measured coordinates of the hand. Therefore, the calculated coordinates of the multiple centers are different from each other. The processing device 250 uses the multiple coordinates to determine the coordinate to be used as the rotation center of the wrench 120. For example, the processing device 250 calculates the median value of the multiple coordinates as the center coordinate of the rotation of the wrench 120. The processing device 250 may calculate the average value or mode of the multiple coordinates as the center coordinate of the rotation of the wrench 120. The accuracy of the calculated center coordinate can be increased thereby.

In the second method, the processing device 250 extracts three coordinate pairs from the multiple coordinates that are measured. Each pair is made of two coordinates. In the example shown in FIG. 23, the pair of the coordinates $P_1$ and $P_2$, the pair of the coordinates $P_3$ and $P_4$, and the pair of the coordinates $P_5$ and $P_6$ are extracted. The six coordinates are taken as $P_1(x_1, y_1, z_1)$, $P_2(x_2, y_2, z_2)$, $P_3(x_3, y_3, z_3)$, $P_4(x_4, y_4, z_4)$, $P_3(x_3, y_5, z_3)$, and $P_6(x_6, y_6, z_6)$. The processing device 250 calculates the midpoint of the two coordinates for each pair. The coordinates of the midpoints of the pairs are taken as $P_{12}, P_{34}$ and $P_{56}$.

As described above, the hand moves in an arc-like shape. Accordingly, the perpendicular bisectors that pass through the midpoints of the coordinate pairs pass through the center of the circle. The center of the circle has the coordinate $P_0(x_0, y_0, z_0)$. In such a case, as shown in Formula (7), the inner product of the vector from the coordinate $P_1$ to the coordinate $P_2$ and the vector from the coordinate $P_{12}$ to the coordinate $P_0$ is zero. Formula (7) can be rewritten as Formula (8).

$$[\text{Formula 7}]$$
$$(P_2 - P_1)\cdot(P_0 - P_{12}) = 0$$

$$(x_2 - x_1)(x_0 - (x_1 + x_2)/2) + (y_2 - y_1)(y_0 - (y_1 + y_2)/2) + (z_2 - z_1)(z_0 - (z_1 + z_2)/2) = 0 \qquad [\text{Formula 8}]$$

The following Formulas (9) and (10) are obtained similarly for the other coordinate pairs.

$$(x_4 - x_3)(x_0 - (x_3 + x_4)/2) + (y_4 - y_3)(y_0 - (y_3 + y_4)/2) + (z_4 - z_3)(z_0 - (z_3 + z_4)/2) = 0 \qquad [\text{Formula 9}]$$

$$(x_6 - x_5)(x_0 - (x_5 + x_6)/2) + (y_6 - y_5)(y_0 - (y_5 + y_6)/2) + \text{-->} (z_6 - z_5)(z_0 - (z_5 + z_6)/2) = 0 \qquad [\text{Formula 10}]$$

The coordinate $P_0(x_0, y_0, z_0)$ is calculated by solving these simultaneous equations. The processing device 250 calculates the coordinate $P_0(x_0, y_0, z_0)$ as the center coordinate of the rotation of the wrench 120.

The processing device 250 may extract four or more coordinate pairs. The processing device 250 selects three coordinate pairs from the four or more coordinate pairs and calculates the coordinate $P_0$ for each combination of the selected coordinate pairs. The processing device 250 calculates the median value, average value, or mode of the multiple coordinates $P_0$ as the center coordinate of the rotation of the wrench 120. The accuracy of the calculated center coordinate can be increased thereby.

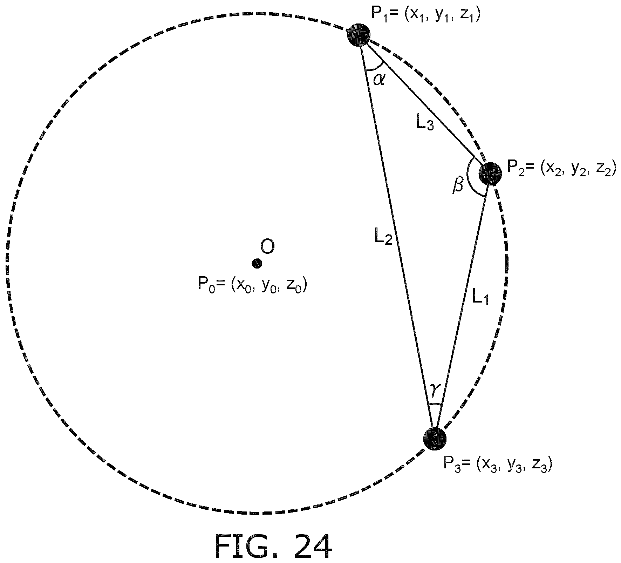

In the third method, the processing device 250 extracts three mutually-different coordinates from the multiple coordinates that are measured. The processing device 250 calculates a circumcenter O of the three coordinates. Here, as shown in FIG. 24, the three coordinates are taken as $P_1(x_1, y_1, z_1)$, $P_2(x_2, y_2, z_2)$, and $P_3(x_3, y_3, z_3)$. The coordinate of the circumcenter O is taken as $P_0(x_0, y_0, z_0)$. The length of the side opposite to the coordinate $P_1$ of a triangle obtained by connecting the coordinates P1 to P3 to each other is taken as $L_1$. The length of the side opposite to the coordinate $P_2$ is taken as $L_2$. The length of the side opposite to the coordinate $P_3$ is taken as $L_3$. The angle at the coordinate $P_1$ is taken as $\alpha$. The angle at the coordinate $P_2$ is taken as $\beta$. The angle at the coordinate $P_3$ is taken as $\gamma$. In such a case, the coordinate of the circumcenter O is represented by the following Formula (11). In Formula (11), the symbols marked with arrows represent position vectors. Formula (11) can be rewritten as Formula (12). Formula (12) can be broken down into Formulas (13) to (15).

$$[\text{Formula 11}]$$
$$\vec{P_0} = \frac{L_1^2(L_2^2 + L_3^2 - L_1^2)\vec{P1} + L_2^2(L_3^2 + L_1^2 - L_2^2)\vec{P2} + L_3^2(L_1^2 + L_2^2 - L_3^2)\vec{P3}}{L_1^2(L_2^2 + L_3^2 - L_1^2) + L_2^2(L_3^2 + L_1^2 - L_2^2) + L_3^2(L_1^2 + L_2^2 - L_3^2)}$$

$$[\text{Formula 12}]$$
$$(x_0, y_0, z_0) = \frac{L_1^2(L_2^2 + L_3^2 - L_1^2)(x_1, y_1, z_1) + L_2^2(L_3^2 + L_1^2 - L_2^2)(x_2, y_2, z_2) + L_3^2(L_1^2 + L_2^2 - L_3^2)(x_3, y_3, z_3)}{L_1^2(L_2^2 + L_3^2 - L_1^2) + L_2^2(L_3^2 + L_1^2 - L_2^2) + L_3^2(L_1^2 + L_2^2 - L_3^2)}$$

$$[\text{Formula 13}]$$
$$x_0 = \frac{L_1^2(L_2^2 + L_3^2 - L_1^2)x_1 + L_2^2(L_3^2 + L_1^2 - L_2^2)x_2 + L_3^2(L_1^2 + L_2^2 - L_3^2)x_3}{L_1^2(L_2^2 + L_3^2 - L_1^2) + L_2^2(L_3^2 + L_1^2 - L_2^2) + L_3^2(L_1^2 + L_2^2 - L_3^2)}$$

[Formula 14]

$$y_0 = \frac{L_1{}^2(L_2{}^2 + L_3{}^2 - L_1{}^2)y_1 + L_2{}^2(L_3{}^2 + L_1{}^2 - L_2{}^2)y_2 + L_3{}^2(L_1{}^2 + L_2{}^2 - L_3{}^2)y_3}{L_1{}^2(L_2{}^2 + L_3{}^2 - L_1{}^2) + L_2{}^2(L_3{}^2 + L_1{}^2 - L_2{}^2) + L_3{}^2(L_1{}^2 + L_2{}^2 - L_3{}^2)}$$

[Formula 15]

$$z_0 = \frac{L_1{}^2(L_2{}^2 + L_3{}^2 - L_1{}^2)z_1 + L_2{}^2(L_3{}^2 + L_1{}^2 - L_2{}^2)z_2 + L_3{}^2(L_1{}^2 + L_2{}^2 - L_3{}^2)z_3}{L_1{}^2(L_2{}^2 + L_3{}^2 - L_1{}^2) + L_2{}^2(L_3{}^2 + L_1{}^2 - L_2{}^2) + L_3{}^2(L_1{}^2 + L_2{}^2 - L_3{}^2)}$$

$x_0$, $y_0$, and $z_0$ are calculated respectively from Formulas (13) to (15). The processing device 250 calculates the coordinate $P_0(x_0, y_0, z_0)$ of the circumcenter O as the center coordinate of the rotation of the wrench 120.

The processing device 250 may extract multiple combinations of three coordinates. The processing device 250 calculates the coordinate of the circumcenter for each combination. The processing device 250 calculates the median value, average value, or mode of the multiple coordinates as the center coordinate of the rotation of the wrench 120. The accuracy of the calculated center coordinate can be increased thereby.

Before performing one of the first to third methods, some coordinates may be selected from the multiple coordinates of the hand. One of the first to third methods is performed using the selected coordinates. For example, only the coordinates estimated to be when the hand is moving in an arc-like shape are selected; and the coordinates to be used in the first to third methods are extracted from these coordinates. By using only the coordinates when the hand is moving in the arc-like shape, the accuracy of the center coordinate can be further increased.

As an example, when a digital tool is used, the processing device 250 selects the coordinates of the hand obtained at the timing (the times) at which data is received from the digital tool. When the screw is turned with the digital tool, the digital tool detects the torque, the rotation angle, etc. The processing device 250 receives the detected values detected by the digital tool. The reception of the detected values indicates that the hand is moving in an arc-like shape. Therefore, the coordinates of the hand obtained at the timing (the times) at which the detected values are received are selected and used to calculate the center coordinate, and so the center coordinate can be calculated with higher accuracy.

Even when the coordinates are not selected, the center coordinate can be calculated by calculating multiple candidates of the center coordinate in one of the first to third methods. For example, the processing device 250 excludes outliers from the multiple candidates and calculates the median value, average value, or mode of the remaining candidates as the center coordinate.

The center coordinate of the rotation of the wrench 120 can be considered to be the position of the screw being turned by the wrench 120. By estimating the position of the screw, the fastening location at which the screw is being turned also can be estimated. For example, when the positions of the fastening locations are preregistered, there is a possibility that the screw is being tightened at the fastening location most proximate to the center coordinate. A threshold is set for the distance between the position of the fastening location and the center coordinate. The processing device 250 calculates the distance between the center coordinate and the position of the fastening location most proximate to the center coordinate. When the distance is not more than the preset threshold when a detected value is received from the digital tool, the processing device 250 estimates that the screw is being turned at the most proximate fastening location.

When the task location is estimated, the processing device 250 extracts the data when the screw was being turned at the task location from the time-series data based on the time at which the task was being performed and the times at which the torques were detected. As a result, the extracted time-series data is associated with the data related to the task location.

For example, the center coordinate is calculated using the coordinates of the hand obtained in a prescribed duration after step S0 shown in FIG. 10. When the screw is not being turned, the calculated center coordinate moves away from the fastening location. As a result, it is estimated that the screw is not being turned. The processing device 250 repeatedly calculates the center coordinate while shifting the duration. When the screw is turned, the center coordinate approaches the position of the fastening location. When the detected value is received from the digital tool, it is estimated that the screw is being turned at the most proximate fastening location. As an example, the duration is set to 6 seconds. The processing device 250 repeats the calculation of the center coordinate while shifting the duration 16 milliseconds at a time. The shift amount is appropriately set according to the computing power of the processing device 250.

The processing device 250 may estimate the start time of the task. For example, when the start of the task has still not been estimated, the processing device 250 estimates the earliest time within a prescribed duration at which a detected value is obtained by the digital tool to be the start time of the task. After the start time of the task is estimated, the processing device 250 determines the end time of the task. When the distance between the center coordinate and the position of the most proximate fastening location is greater than the threshold, the processing device 250 estimates the earliest time within a duration that the detected value was no longer obtained from the digital tool to be the end time of the task.

The processing device 250 extracts, from the overall time-series data, the data from the estimated start time to the estimated end time. The processing device 3 associates the extracted time-series data with the data (e.g., the ID) related to the task location.

Subsequently, it may be determined whether or not the extracted time-series data is normal. The extracted time-series data may be used to determine the proficiency of the worker.

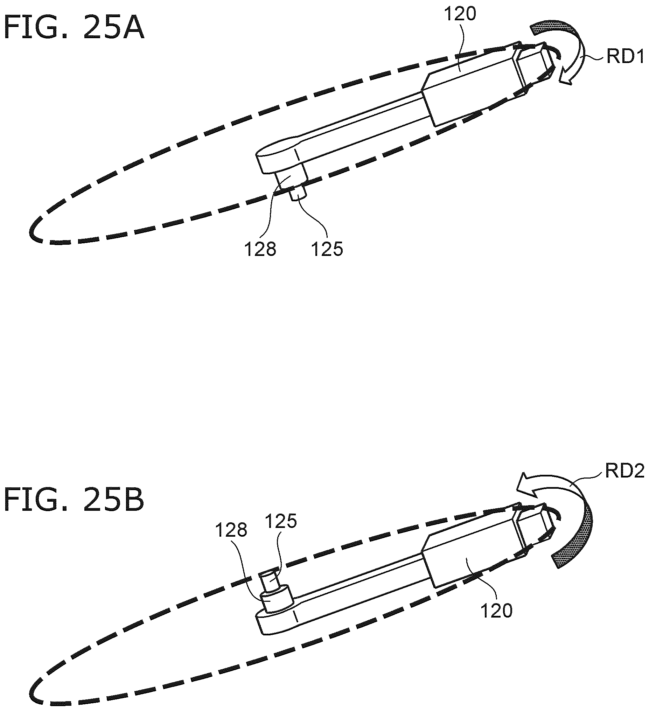

FIGS. 25A to 27 are figures for describing a method for calculating the center coordinate.

To more accurately estimate the position of the screw, the processing device 250 may use the length of the tool interposed between the wrench 120 and the screw to estimate the position at which the screw is present. In the example shown in FIGS. 5A to 7D, a socket that is not illustrated is caused to engage the wrench 120. In other words, the position of the screw is separated from the center coordinate of the rotation of the wrench 120 by the length of the socket. When the length of the socket is preregistered, the processing device 250 can use the center coordinate and the length of the socket to more accurately estimate the position of the screw.

When using the length of the socket to estimate the position of the screw, it is necessary to determine the side at which the screw is positioned with respect to the plane in which the wrench 120 is rotating. In the example shown in FIG. 25A, the wrench 120 rotates in a rotation direction RD1. The screw 125 and a socket 128 are positioned at the lower side. In the example shown in FIG. 25B, the wrench 120 rotates in a rotation direction RD2. The rotation direction RD2 is the opposite of the rotation direction RD1. The screw 125 and the socket 128 are positioned at the upper side of a plane parallel to the rotation direction RD2.

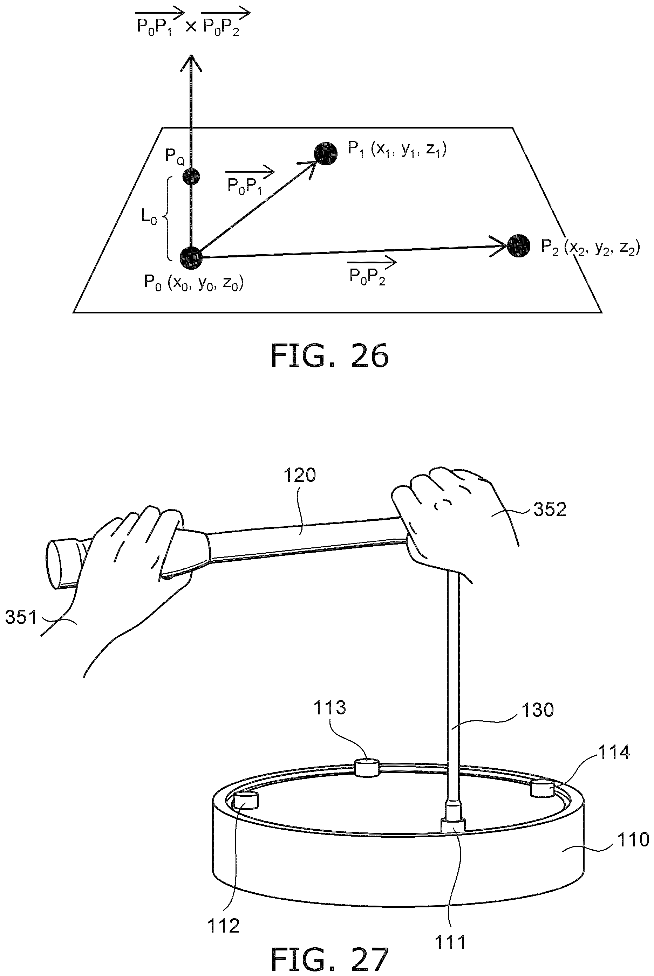

To determine the side at which the screw 125 is positioned, the processing device 250 uses the center coordinate, two coordinates of the hand, time-series information of the two coordinates, and tighten/loosen information of the screw. For example, as shown in FIG. 26, the two coordinates are taken as $P_1(x_1, y_1, z_1)$ and $P_2(x_2, y_2, z_2)$. The center coordinate is taken as $P_0(x_0, y_0, z_0)$. The time at which the hand is at the coordinate $P_1$ and the time at which the hand is at the coordinate $P_2$ are known. In other words, the processing device 250 stores time-series information of the coordinates $P_1$ and $P_2$. In the example, the time at which the hand was positioned at the coordinate $P_1$ is before the time at which the hand was positioned at the coordinate $P_2$.

The tighten/loosen information indicates whether the screw is being tightened or loosened. When the wrench 120 is a digital tool, the wrench 120 generates the tighten/loosen information by determining whether the screw is being tightened or loosened based on the detected torque. The processing device 250 may generate the tighten/loosen information by determining whether the screw is tightened or loosened based on the time-series data of the torque received from the wrench 120.

A plane that passes through the coordinates $P_0$ to $P_2$ is represented by the following Formula (16). In Formula (16), $k, l, m,$ and $n$ are constants.

$$[\text{Formula 16}]$$
$$kx + ly + mz + n = 0$$

The following Formulas (17) to (19) are obtained by substituting the coordinates of $P_0$ to $P_2$ in Formula (16). The constants $k, l, m,$ and $n$ are calculated from Formulas (17) to (19).

$$[\text{Formula 17}]$$
$$kx_0 + ly_0 + mz_0 + n = 0$$

$$[\text{Formula 18}]$$
$$kx_1 + ly_1 + mz_1 + n = 0$$

$$[\text{Formula 19}]$$
$$kx_2 + ly_2 + mz_2 + n = 0$$

Here, the processing device 250 calculates a vector from the center coordinate $P_0$ to the coordinate $P_1$ at the previous time. Also, the processing device 250 calculates a vector from the center coordinate $P_0$ to the coordinate $P_2$ at the subsequent time. The screw 125 is at a position $P_Q$ separated from the center coordinate $P_0$ by a length $L_0$ of the socket on the normal vector $P_0P_1 \times P_0P_2$. When the screw is being tightened and the time of the coordinate $P_1$ is before the time of the coordinate $P_2$, the processing device 250 calculates the normal vector $P_0P_1 \times P_0P_2$ of the vector $P_0P_1$ and the vector $P_0P_2$.

The length from the coordinate $P_0$ to the coordinate $P_Q$ at which the wrench and the socket act on the screw is represented by the following Formula (20) in the following formulas, the symbols marked with arrows indicate that the value of the symbol is a vector.

$$[\text{Formula 20}]$$

$$|\overrightarrow{P_0P_Q}| = \sqrt{\{(k-x_0)^2+(l-y_0)^2+(m-z_0)^2\}} = L_0$$

On the other hand, the vector from the coordinate $P_0$ to the coordinate $P_Q$ also may be represented by the following Formula (21) using the vector $P_0P_1$ and the vector $P_0P_2$. In Formula (21), $t$ is a constant.

$$[\text{Formula 21}]$$

$$\overrightarrow{P_0P_Q} = (k-x_0, l-y_0, m-z_0) = t(k,l,m)$$

The following Formula (22) is obtained by substituting Formula (21) in Formula (20). The length $L_0$ in Formula (22) is preregistered. $t$ is calculated by solving Formula (22).

$$[\text{Formula 22}]$$

$$\sqrt{\{(\{(y_1-y_0)(z_2-z_0)-(y_2-y_0)(z_2-z_0)\}^2 *t^2} \\ +\{(z_1-z_0)(x_2-x_0)-(z_2-z_0)(x_1-x_0)\}*t^2 \\ +\{(x_1-x_0)(y_2-y_0)-(x_2-x_0)(y_1-y_0)\}*t^2\} = L_0$$

When $t$ is calculated, the coordinate $P_Q$ is calculated using the coordinate $P_0$ and the constant $k, l, m, n,$ and $t$. In other words, the position of the screw is obtained.

As shown in FIG. 27, there are cases where the screw is fastened via an extension bar 130. The extension bar 130 is mounted between the wrench 120 and the screw. In such a case as well, similarly to the method described above, the position of the screw can be estimated using the length of the extension bar 130.

In other words, the screw is at a position separated from the center coordinate $P_0$ by the sum of the length of the socket 128 and the length of the extension bar 130 on the normal vector $P_0P_1{\times}P_0P_2$. The position $P_Q$ of the screw is estimated using the center coordinate $P_0$, the length of the socket 128, and the length of the extension bar 130. The position of the screw can be estimated with higher accuracy by considering the length of another tool interposed between the screw and the wrench 120.

When the position of the screw is estimated, the processing device 250 uses the estimated position of the screw to estimate the fastening location at which the screw is being turned. For example, the processing device 250 calculates the distance between the position of the screw and the position of the fastening location most proximate to the screw. When the distance is not more than a preset threshold, the processing device 250 estimates that the screw is being turned at the most proximate fastening location.

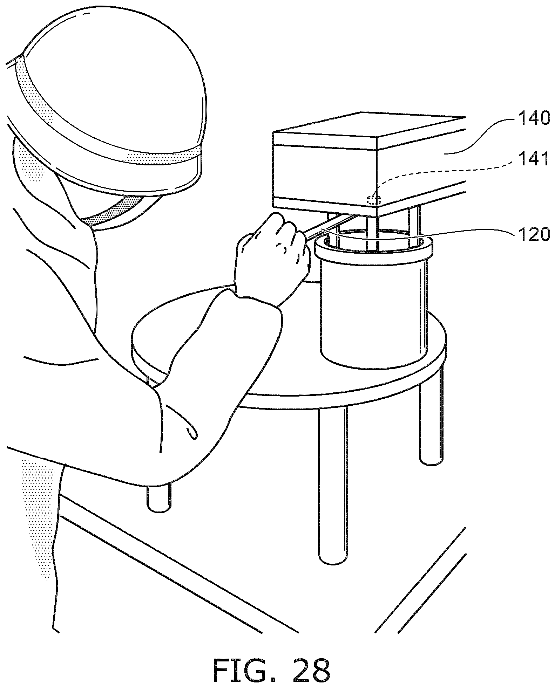

FIG. 28 is a schematic view illustrating a task.

For example, as in an article 140 shown in FIG. 28, there are also cases where a fastening location 141 is in a narrow location. It is difficult for the worker to visually recognize the fastening location 141. Furthermore, in the example, the left hand cannot be inserted into the location of the fastening location; and the worker cannot grip the head of the wrench 120 with the left hand. In other words, the hand cannot contact the object. Also, even if the hand and the object are in contact, the image camera 231 and the depth camera 232 cannot image the contact. Therefore, the contact between the hand and the object cannot be detected. In such a case, the location at which the screw is being fastened can be estimated by calculating the center coordinate of the rotation of the tool based on the movement of the hand.

Contact between the object and the prescribed object may be detected in addition to the calculation of the center coordinate. Compared to the calculation of the center coordinate, the necessary calculation amount of the contact with the object is low. Therefore, by detecting the contact between the object and the prescribed object, the location at which the screw is being tightened can be estimated more quickly. For example, when the task is erroneous, rework of the task can be reduced by outputting an alarm more promptly.

Herein, an example is mainly described in which a screw is tightened at a fastening location. Embodiments of the invention are applicable not only when a screw is tightened at a fastening location, but also when a screw is loosened at a fastening location. For example, a screw is loosened at a fastening location when performing maintenance, inspection, or repair of a product. According to embodiments of the invention, extracted time-series data can be associated with data related to the task location when loosening the screw.

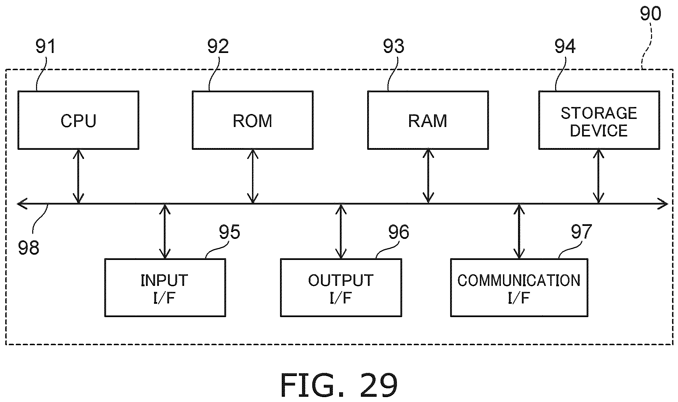

FIG. 29 is a schematic view showing a hardware configuration.

For example, a computer 90 shown in FIG. 29 is used as the processing device 3, the training device 8, and the processing device 250. The computer 90 includes a CPU 91, ROM 92, RAM 93, a storage device 94, an input interface 95, an output interface 96, and a communication interface 97.

The ROM 92 stores programs controlling operations of the computer 90. The ROM 92 stores programs necessary for causing the computer 90 to realize the processing described above. The RAM 93 functions as a memory region into which the programs stored in the ROM 92 are loaded.

The CPU 91 includes a processing circuit. The CPU 91 uses the RAM 93 as work memory and executes the programs stored in at least one of the ROM 92 or the storage device 94. When executing the programs, the CPU 91 executes various processing by controlling configurations via a system bus 98.

The storage device 94 stores data necessary for executing the programs and/or data obtained by executing the programs. The storage device 94 includes a solid state drive (SSD), etc. The storage device 94 may be used as the storage device 6 or the storage device 270.

The input interface (I/F) 95 can connect the computer 90 with the input device 4. The CPU 91 can read various data from the input device 4 via the input I/F 95.

The output interface (I/F) 96 can connect the computer 90 and an output device. The CPU 91 can transmit data to the display device 5 via the output I/F 96, and can cause the display device 5 to display information.

The communication interface (I/F) 97 can connect the computer 90 and a device outside the computer 90. For example, the communication I/F 97 connects a digital tool and the computer 90 by Bluetooth (registered trademark) communication.

The data processing performed by the processing device 3 or the processing device 250 may be performed by only one computer 90. A part of the data processing may be performed by a server or the like via the communication I/F 97.

Processing of various types of data described above may be recorded, as a program that can be executed by a computer, on a magnetic disk (examples of which include a flexible disk and a hard disk), an optical disk (examples of which include a CD-ROM, a CD-R, a CD-RW, a DVD-ROM, a DVD±R, and DVD±RW), a semiconductor memory, or another non-transitory computer-readable storage medium.

For example, information recorded on a recording medium can be read by a computer (or an embedded system). The recording medium can have any record format (storage format). For example, the computer reads a program from the recording medium and causes the CPU to execute instructions described in the program, on the basis of the program. The computer may obtain (or read) the program through a network.

Embodiments of the invention include the following features. Feature 1

A processing device, configured to:

estimate a first task location by using a first image, a screw being turned at the first task location;
extract first time-series data from time-series data acquired by a tool turning the screw, the first time-series data being time-series data when the screw is being turned at the first task location; and
associate the first time-series data with data related to the first task location.

Feature 2

The processing device according to feature 1, further configured to:

measure a coordinate of a hand of a worker turning the screw based on the first image,
the first task location being estimated by using the coordinate.

Feature 3

The processing device according to feature 2, further configured to:
associate data of the worker and a time at which the screw is turned with the data related to the first task location.

Feature 4

The processing device according to any one of features 1 to 3, further configured to:

determine whether or not the first time-series data is normal; and
output an alert when the first time-series data is determined to be abnormal.

Feature 5

The processing device according to feature 4, further configured to:
associate, with the data related to the first task location, a determination result of whether or not the first time-series data is normal.

Feature 6

The processing device according to feature 4 or 5, in which

the first time-series data includes a torque, and
the first time-series data is determined to be abnormal when the torque is greater than a first threshold or when a period of the first time-series data is greater than a second threshold.

Feature 7

The processing device according to feature 4 or 5, further configured to:

input the first time-series data to a first determination part,
the determination of whether or not the first time-series data is normal being based on a result output from the first determination part.

Feature 8

The processing device according to any one of features 1 to 7, further configured to:

estimate a second task location by using a second image, another screw being turned at the second task location;
extract second time-series data from the time-series data, the second time-series data being time-series data when the other screw is being turned at the second task location; and
associate the second time-series data with data related to the second task location.

Feature 9

The processing device according to any one of features 1 to 8, further configured to:

input the first time-series data to a second determination part, the second determination part being configured to determine a proficiency of a worker turning the screw; and
determine the proficiency of the worker based on a result output from the second determination part.

Feature 10

A training device, configured to:
train a first determination part to determine whether or not the first time-series data according to feature 1 is normal by using the first time-series data and the data related to the first task location associated by the processing device according to feature 1.

Feature 11

A training device, configured to:
train a second determination part to determine a proficiency of a worker turning the screw according to feature 1 by using the first time-series data and the data related to the first task location associated by the processing device according to feature 1.

Feature 12

A mixed reality device, configured to:

display a virtual space to overlap a real space;

17

display a virtual object corresponding to a fastening location at which a screw is turned; and
when the virtual object and a prescribed object come into contact, associate at least a part of time-series data acquired by a tool turning the screw with data related to the fastening location corresponding to the contacted virtual object.

Feature 13

A processing method, configured to:
cause a computer to

estimate a first task location by using a first image, a screw being turned at the first task location,
extract first time-series data from time-series data acquired by a tool turning the screw, the first time-series data being time-series data when the screw is being turned at the first task location, and
associate the first time-series data with data related to the first task location.

Feature 14

A program, when executed by the computer according to feature 13, causing the computer to perform the processing method according to feature 13.

Feature 15

A storage medium configured to store the program according to feature 14.
In the specification, "or" shows that "at least one" of items listed in the sentence can be adopted.
According to the embodiments above, a processing device, a processing system, a mixed reality device, a processing method, a program, and a storage medium are provided in which corresponding time-series data can be automatically associated with data related to a task location. For example, it can be discriminated which parts of the time-series data detected by the tool match which fastening locations at which the screws are turned. Also, according to the embodiments, a training device that can use associated data to train a determination part is provided.
While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention. Moreover, above-mentioned embodiments can be combined mutually and can be carried out.

**Claims**

1. A processing device (3), configured to:

   estimate a first task location by using a first image (IMG), a screw (125) being turned at the first task location;
   extract first time-series data from time-series data acquired by a tool (120) turning the screw, the first time-series data being time-series data when the screw is being turned at the first task location; and
   associate the first time-series data with data related to the first task location.

2. The processing device (3) according to claim 1, further configured to:

   measure a coordinate of a hand of a worker turning the screw (125) based on the first image (IMG),
   the first task location being estimated by using the coordinate.

3. The processing device (3) according to claim 2, further configured to:
   associate data of the worker and a time at which the screw (125) is turned with the data related to the first task location.

4. The processing device (3) according to any one of claims 1 to 3, further configured to:

   determine whether or not the first time-series data is normal; and
   output an alert (172) when the first time-series data is determined to be abnormal.

**5.** The processing device (3) according to claim 4, further configured to:
associate, with the data related to the first task location, a determination result of whether or not the first time-series data is normal.

**6.** The processing device (3) according to claim 4 or 5, wherein

the first time-series data includes a torque, and
the first time-series data is determined to be abnormal when the torque is greater than a first threshold or when a period of the first time-series data is greater than a second threshold.

**7.** The processing device (3) according to claim 4 or 5, further configured to:

input the first time-series data to a first determination part,
the determination of whether or not the first time-series data is normal being based on a result output from the first determination part.

**8.** The processing device (3) according to any one of claims 1 to 7, further configured to:

estimate a second task location by using a second image (IMG), another screw (125) being turned at the second task location;
extract second time-series data from the time-series data, the second time-series data being time-series data when the other screw is being turned at the second task location; and
associate the second time-series data with data related to the second task location.

**9.** The processing device (3) according to any one of claims 1 to 8, further configured to:

input the first time-series data to a second determination part, the second determination part being configured to determine a proficiency of a worker (100) turning the screw (125); and
determine the proficiency of the worker based on a result output from the second determination part.

**10.** A training device, configured to train a first determination part to determine whether or not the first time-series data is normal,
the determination part being trained using the first time-series data and the data related to the first task location associated by the processing device according to claim 1.

**11.** A training device (8), configured to:
train a second determination part to determine a proficiency of a worker (100) turning the screw (125) according to claim 1 by using the first time-series data and the data related to the first task location associated by the processing device (3) according to claim 1.

**12.** A mixed reality device, configured to:

display a virtual space to overlap a real space;
display a virtual object corresponding to a fastening location at which a screw (125) is turned; and
when the virtual object and a prescribed object come into contact, associate at least a part of time-series data acquired by a tool (120) turning the screw with data related to the fastening location corresponding to the contacted virtual object.

**13.** A processing method, configured to:
cause a computer to

estimate a first task location by using a first image (IMG), a screw (125) being turned at the first task location,
extract first time-series data from time-series data acquired by a tool (120) turning the screw, the first time-series data being time-series data when the screw is being turned at the first task location, and
associate the first time-series data with data related to the first task location.

**14.** A storage medium configured to store a program,
the program causing the computer to perform the processing method according to claim 13.

FIG. 1

FIG. 2

FIG. 3

FIG. 4

TD1a

TD1b

TD1c

TD1d

FIG. 5A    FIG. 5B    FIG. 5C    FIG. 5D

150

| WORKER ID | TIME | DATA NAME | WORKER NAME | TOOL ID | FASTENING LOCATION ID | TORQUE | PROFICIENCY | COUNT |
|---|---|---|---|---|---|---|---|---|
| 151 | 152 | 153 | 154 | 155 | 156 | 157 | 158 | 159 |
| 210 | 2022/9/1 14:07:16 | D2291140716 | X | WR1 | A1 | 0.75 | EXPERT | 1 |
| 210 | 2022/9/1 14:07:24 | D2291140724 | X | WR1 | A3 | 0.75 | EXPERT | 1 |
| 210 | 2022/9/1 14:07:32 | D2291140732 | X | WR1 | A2 | 0.64 | EXPERT | 1 |
| 210 | 2022/9/1 14:07:40 | D2291140740 | X | WR1 | A4 | 0.69 | EXPERT | 1 |
| 210 | 2022/9/1 14:07:52 | D2291140752 | X | WR1 | A1 | 1.2 | EXPERT | 2 |

FIG. 6

FIG. 7A

FIG. 7B

FIG. 7C

FIG. 7D

FIG. 8A

FIG. 8B

FIG. 8C

FIG. 8D

FIG. 9A

FIG. 9B

FIG. 9C

FIG. 9D

START

S0 — SELECT TASK/WORKER

50a
·TASK ID  ·ARTICLE ID
·TASK NAME  ·ARTICLE NAME

S1 — IMAGE

50b
·WORKER ID  ·WORKER NAME
·PROFICIENCY

S2 — RECEIVE TIME-SERIES DATA

S3 — ESTIMATE

50c
·FASTENING LOCATION ID
·FASTENING POSITION
·TORQUE VALUE
·SCREW-TIGHTENING COUNT
·TIME-SERIES DATA

S4 — EXTRACT/ASSOCIATE

S5 — TIME-SERIES DATA NORMAL?

NO

YES

S20
MANUAL ANNOTATION

S6 — COMBINE

S7 — DETERMINE BY FIRST DETERMINATION PART

FIRST DETERMINATION PART — 51

S8 — DETERMINE BY SECOND DETERMINATION PART

SECOND DETERMINATION PART — 52

S9 — DISPLAY

S10 — ALL TASKS COMPLETED?

NO

YES

END

FIG. 10

S20

```
        ┌─────────────┐
        │    START    │
        └──────┬──────┘
               │
               ▼
S21 ─┌───────────────────────────┐
     │          DISPLAY          │
     └─────────────┬─────────────┘
                   │
                   ▼
S22 ─┌───────────────────────────┐
     │     ACCEPT ANNOTATION      │
     └─────────────┬─────────────┘
                   │
                   ▼
S23 ─┌───────────────────────────┐
     │        ACCEPT TYPE         │
     └─────────────┬─────────────┘
                   │
                   ▼
S24 ─┌───────────────────────────┐
     │         ASSOCIATE          │
     └─────────────┬─────────────┘
                   │
                   ▼
S25 ─┌───────────────────────────┐
     │    STORE AS TRAINING DATA  │
     └─────────────┬─────────────┘
                   │
                   ▼
        ┌─────────────┐
        │     END     │
        └─────────────┘
```

FIG. 11

FIG. 12

180

181 — WORKER NAME : A
182 — TASK NAME : ○○
183 — TASK TIME : △MINUTES

184 — TASK RESULT : TASK WAS NORMAL TWO OUT
OF THREE TIMES

185 — TASK LEVEL : B

186

186a      186b      186c      187

FIG. 13

FIG. 14

FIG. 15

FIG. 16

FIG. 17

FIG. 18

FIG. 19

450

ERROR

FASTENING LOCATION : 3
PLEASE CHECK FOR
LOOSE SCREW

402

302

403

404

120

121  121

352

351

FIG. 20

FIG. 21

FIG. 22

FIG. 23

FIG. 24

FIG. 25A

120

RD1

128  125

FIG. 25B

RD2

128  125

120

$$\overrightarrow{P_0P_1} \times \overrightarrow{P_0P_2}$$

$P_Q$

$L_0$

$\overrightarrow{P_0P_1}$

$P_1\ (x_1,\ y_1,\ z_1)$

$P_0\ (x_0,\ y_0,\ z_0)$

$\overrightarrow{P_0P_2}$

$P_2\ (x_2,\ y_2,\ z_2)$

FIG. 26

FIG. 27

140
141
120

FIG. 28

EP 4 539 019 A1

FIG. 29

# EP 4 539 019 A1

## EUROPEAN SEARCH REPORT

**Application Number**

EP 24 20 5230

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 116 914 A1 (YAMAGATA CORP HQ [JP]; KYOTO TOOL CO LTD [JP]; HITACHI LTD [JP]) 11 January 2023 (2023-01-11) * figures 1-18 * * paragraphs [0053] - [0061], [0078], [0081], [0095] - [0099], [0115] - [0118] * | 1-14 | INV. G09B19/24 |
| A | US 2023/260224 A1 (GREUNKE LARRY CLAY [US]) 17 August 2023 (2023-08-17) * figures 17-35 * * paragraphs [0076] - [0081], [0139] - [0145], [0176] - [0185] * | 1-14 | |
| A | EP 3 333 654 A1 (BOEING CO [US]) 13 June 2018 (2018-06-13) * figures 1-3C * * paragraphs [0045] - [0062] * | 1-14 | |

**TECHNICAL FIELDS SEARCHED (IPC)**

G09B

The present search report has been drawn up for all claims

| Place of search | Date of completion of the search | Examiner |
|---|---|---|
| Munich | 21 February 2025 | Abdel Jaber, Wael |

## ANNEX TO THE EUROPEAN SEARCH REPORT
## ON EUROPEAN PATENT APPLICATION NO.

EP 24 20 5230

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2025

| Patent document cited in search report | | Publication date | Patent family member(s) | | Publication date |
|---|---|---|---|---|---|
| EP 4116914 | A1 | 11-01-2023 | CN | 115244565 A | 25-10-2022 |
| | | | EP | 4116914 A1 | 11-01-2023 |
| | | | JP | 7341441 B2 | 11-09-2023 |
| | | | JP | WO2021176645 A1 | 10-09-2021 |
| | | | TW | 202141405 A | 01-11-2021 |
| | | | US | 2023104917 A1 | 06-04-2023 |
| | | | WO | 2021176645 A1 | 10-09-2021 |
| US 2023260224 | A1 | 17-08-2023 | US | 2023260224 A1 | 17-08-2023 |
| | | | US | 2023260415 A1 | 17-08-2023 |
| | | | WO | 2023158793 A1 | 24-08-2023 |
| EP 3333654 | A1 | 13-06-2018 | BR | 102017025093 A2 | 26-06-2018 |
| | | | CA | 2982575 A1 | 09-06-2018 |
| | | | CN | 108228345 A | 29-06-2018 |
| | | | EP | 3333654 A1 | 13-06-2018 |
| | | | JP | 7184511 B2 | 06-12-2022 |
| | | | JP | 2018160232 A | 11-10-2018 |
| | | | KR | 20180066823 A | 19-06-2018 |
| | | | RU | 2017136560 A | 17-04-2019 |
| | | | US | 2018165978 A1 | 14-06-2018 |

EPO FORM P0459

For more details about this annex : see Official Journal of the European Patent Office, No. 12/82